# EUROPEAN PATENT APPLICATION

(11) **EP 2 589 848 A2**
(43) Date of publication of application: **08.05.2013**
(21) Application number: 12772185.0
(22) Date of filing: 31.08.2012
(51) Int. Cl.: F16L 37/086, F16L 37/12

(54) **ONE TOUCH-TYPE PIPE CONNECTION APPARATUS**

(30) Priority: 02.09.2011 KR 20110089164; 07.11.2011 KR 20110115035; 22.12.2011 KR 20110140244; 02.05.2012 KR 20120046100; 13.08.2012 KR 20120088124
(71) Applicant: Kim, Sung-Hun, Hwaseong-si, Gyeonggi-do 445-986 (KR)
(72) Inventor: The designation of the inventor has not yet been filed
(74) Representative: Brunacci, Marco
(86) International application number: PCT/KR2012/006961
(87) International publication number: WO 2013/032254

(57) **Abstract**

Disclosed is one-touch pipe connection device which can ensure excellent fluid-tightness, excellent clamping force, and convenient assembly while allowing pipe-to-pipe connection to be conducted simply. The one-touch pipe connection device includes a first body member for receiving a pipe, a first fluid-tight member positioned in each of left and right side of the inner peripheral surface of the first body member with reference to the longitudinal center of the inner peripheral surface to ensure fluid-tightness, a support member for linearly compressing the fluid-tight member, a fastening member screwed to the first body member, a compression member inserted into the fastening member, and moved outwardly by a compression spring; and a plurality of tight contact elements provided on the compression member tightly clamped on the outer peripheral surface of the pipe when the compression member is moved.

## Description

### PRIORITY

The present application claims priority under 35 U.S.C. §119(a) to Korean Patent Application No. 10-2011-0089164, filed in the Korean Intellectual Property Office on September 2, 2011, to Korean Patent Application No. 10-2011-0115035, filed in the Korean Intellectual Property Office on November 7, 2011, to Korean Patent Application No. 10-2011-0140244, filed in the Korean Intellectual Property Office on December 22, 2011, and to Korean Patent Application No. 10-2012-0046100, filed in the Korean Intellectual Property Office on May 2, 2012, the disclosures of which are hereby incorporated by reference in their entireties.

### BACKGROUND OF THE INVENTION

### 1. Field of the invention

The present invention relates to a one-touch type pipe connection device, and more particularly to a one-touch pipe connection device, which can ensure excellent fluid-tightness, excellent clamping force, and convenient assembly while allowing pipe-to-pipe connection to be conducted simply.

### 2. Description of the Prior Art

As generally known in the art, pipes and pipe joints with various sizes and shapes are used for guiding fluids to one or more predetermined courses, and pipe connection methods using such pipes and pipe joints in combination typically employ a welding process that can provide excellent endurance and fluid-tightness at connected parts.

However, such a welding process has problems in that securing a space for welding work for connecting pipes is essentially required, and repair work is very inconvenient to conduct when defects occur at the welded parts even after connecting pipes through welding. For example, since welding areas should be formed along the outer peripheral surfaces of the pipes if pipe-to-pipe connection is conducted through welding, it is essential to secure a work space. In addition, if it is necessary to interpose or reinstall one or more pressure wheels between pipes subsequently at the time of defect-repairing as the pressure wheels are used when connecting the pipes through welding, it is very difficult to interpose or reinstall the pressure wheels between the pipes. Moreover, if pipes with different sizes are connected through flange-coupling, welding or the like, it is necessary to separately prepare expensive pipe joints. To solve these problems, the inventor of the present application developed pipe connection devices as disclosed in Korean registered patent Nos. 10-0899461 and 10-0927198.

However, the pipe connection devices of the above-mentioned patents have a problem in that since the pipe connection devices are adapted to be clamped to pipes by tightening plural externally exposed bolts, it is impossible to ensure fluid-tightness and clamping force if and when an impact is applied to the bolts so that the bolts are loosened. In addition, it is essential to firmly fasten the bolts, which is complicated and time-consuming. In order to solve these problems, the inventor developed a pipe connection device as disclosed in Korean registered patent No. 10-0977308. However, there are still researches requested from various points of view for saving materials by reducing products as well as for ensuring more excellent fluid-tightness and convenient assembly.

### SUMMARY OF THE INVENTION

Accordingly, the present invention has been made to solve the above-mentioned problems occurring in the prior art, and the present invention provides a one-touch pipe connection device including features for ensuring reduction in size and convenient assembly of the final products as well as more excellent fluid-tightness and clamping force, while avoiding a structure anchored by one or more bolts if possible and allowing simple pipe-to-pipe connection.

In order to accomplish this object, there is provided a one-touch pipe connection device including: a first body member with a size for receiving a pipe, the first body member including, on each of left and right sides of the inner peripheral surface thereof with reference to the longitudinal center of the inner peripheral surface, a stepped portion formed to horizontally extend, a first insertion groove arranged vertically in relation to the stepped portion, and a threaded portion formed to horizontally extend from the insertion groove, wherein the stepped portion, the first insertion groove and the threaded portion are arranged in this order from the longitudinal center to each end of inner peripheral surface of the first body member; a first fluid-tight member including a compression ring portion arranged along the first insertion groove, a seating portion integrally extending from the compression ring portion and arranged in the stepped portion, and an elastic portion slantingly extending from an end of the seating portion toward the center of the first body member so that the elastic portion comes into tight contact with a pipe along the outer peripheral surface of the pipe when the pipe is inserted; an annular support member formed with a compression groove that comes into tight contact with the compression ring portion; a fastening member which is adapted to compress one of the support members by one end thereof by being screwed to the first body member, the fastening member having a slanted surface with an inner diameter increasing along the direction of inserting the pipe, and a stopper portion formed at the smaller-diameter end of the slanted surface; a compression member including a first protrusion rib inserted into the fastening member to form a closed space for arranging a compression spring together with the stopper portion, and a second protrusion rib formed opposite to the first protrusion rib and exposed to the outside; and a plurality of tight contact elements installed at regular intervals on an end portion of the compression member positioned within the slanted surface, each of the tight contact elements having teeth, whereby when the pipe is inserted into the first body member, the teeth come into tight contact with the outer peripheral surface of the pipe with the help of the restoring force of the compression spring.

In accordance with another aspect of the present invention, there is provided a one-touch pipe connection device including: a second body member with a size for receiving a pipe, the second body member having an anchoring protrusion formed along the inner peripheral surface of the second body member at the longitudinal center of the second body member, the inner peripheral surface being formed with threads on each end area thereof; an insertion member inserted into the second body member and fixed along the anchoring protrusion at the longitudinal central area thereof, the insertion member having a second insertion groove at each end of the inner peripheral surface thereof; a second fluid-tight member including: a fixed ring portion fixedly fitted in the second insertion groove, and an elastic portion slantingly extending from an end of the fixed ring portion toward the center of the second body member so that the elastic portion comes into tight contact with a pipe along the outer peripheral surface of the pipe when the pipe is inserted; a fastening member adapted to compress the insertion member by one end thereof by being screwed to the second body member, the fastening member having a slanted surface with an inner diameter increasing along the direction of inserting a pipe, and a stopper portion formed at the smaller-diameter end of the slanted surface; a compression member including a first protrusion rib inserted into the fastening member to form a closed space for arranging a compression spring together with the stopper portion, and a second protrusion rib formed opposite to the first protrusion rib and exposed to the outside; and a plurality of tight contact elements installed at regular intervals on an end portion of the compression member positioned within the slanted surface, each of the tight contact elements having teeth, whereby when the pipe is inserted into the first body member, the teeth come into tight contact with the outer peripheral surface of the pipe with the help of the restoring force of the compression spring.

In accordance with still another aspect of the present invention, there is provided a one-touch pipe connection device including: a first body member with a size for receiving a pipe, the first body member including, on each of left and right sides of the inner peripheral surface thereof with reference to the longitudinal center of the inner peripheral surface, a stepped portion formed to horizontally extend, a first insertion groove arranged vertically in relation to the stepped portion, and a threaded portion formed to horizontally extend from the insertion groove, wherein the stepped portion, the first insertion groove and the threaded portion are arranged in this order from the longitudinal center to each end of inner peripheral surface of the first body member; a first fluid-tight member including a compression ring portion arranged along the first insertion groove, a seating portion integrally extending from the compression ring portion and arranged in the stepped portion, and an elastic portion slantingly extending from an end of the seating portion toward the center of the first body member so that the elastic portion comes into tight contact with a pipe along the outer peripheral surface of the pipe when the pipe is inserted; an annular support member formed with a compression groove that comes into tight contact with the compression ring portion; a fastening member which is adapted to compress one of the support members by one end thereof by being screwed to the first body member, the fastening member having a slanted surface with an inner diameter increasing along the direction of inserting the pipe, and a stopper portion formed at the smaller-diameter end of the slanted surface; a push member having a second protrusion rib provided at an outer end thereof to be exposed to the outside, the push member being adapted to allow a compression spring to be arranged between the second protrusion rib and an end of the fastening member or the stopper portion, and the push member being partially inserted into the fastening member; and a plurality of tight contact elements installed at regular intervals on an end portion of the compression member positioned within the slanted surface, each of the tight contact elements having teeth, whereby when the pipe is inserted into the first body member, the teeth come into tight contact with the outer peripheral surface of the pipe with the help of the restoring force of the compression spring, wherein the push member is formed with a plurality of slits spaced apart from each other and extending longitudinally from the end opposite to the second protrusion rib.

In accordance with yet another aspect of the present invention, there is provided a one-touch pipe connection device including: a body member having an inner peripheral surface, the body member including, on each of left and right sides of the inner peripheral surface with reference to the longitudinal center of the inner peripheral surface, a recessed portion formed by recessing the inner peripheral surface, a slanted surface with an inner diameter increasing along the direction of inserting a pipe, and a stopper portion formed at the smaller-diameter end of the slanted surface; an annular packing member which is introduced into the body member by being deformed by an external force, and then comes into tight contact with the inside of the recessed portion; a push member having a second protrusion rib provided at an outer end thereof to be exposed to the outside, the push member being adapted to allow a compression spring to be arranged between the second protrusion rib and an end of the fastening member or the stopper portion, and the push member being partially inserted into the fastening member; and a plurality of tight contact elements installed at regular intervals on an end portion of the compression member positioned within the slanted surface, each of the tight contact elements having teeth, whereby when the pipe is inserted into the first body member, the teeth come into tight contact with the outer peripheral surface of the pipe with the help of the restoring force of the compression spring, wherein the push members is formed with a plurality of slits spaced apart from each other and extending longitudinally from the end opposite to the second protrusion rib.

The one-touch pipe connection devices as described above enable firm pipe-to-pipe connection merely through a simple step of inserting pipes into the connection devices, and are capable of providing more excellent fluid-tightness and reduction in size of the final products as compared to conventional technologies. As a result, the one-touch pipe connection devices can significantly shorten the periods of installing, maintenance and repairing works of pipes, can prevent accidents causing leakage beforehand, and can miniaturize the final products.

In addition, because a synthetic resin material as well as a metallic material can be used as a product material due to the injection-moldable construction of each of the components, it is possible to mass-produce excellent products with low manufacturing costs.

### BRIEF DESCRIPTION OF THE DRAWINGS

The above and other objects, features and advantages of the present invention will be more apparent from the following detailed description taken in conjunction with the accompanying drawings, in which:
FIGs. 1 to 3 show an embodiment of the one-touch pipe connection device;
FIGs. 4 and 5 show another embodiment of the one-touch pipe connection device;
FIGs. 6 and 7 are cross-sectional views showing engagement constructions between a compression member and tight contact elements in the one-touch connection device, respectively;
FIG. 8 shows a construction in which a cover part is applied to the one-touch pipe connection device;
FIG. 9 shows a construction for fixing the one-touch pipe connection device to an elastic bracket;
FIG. 10 shows another embodiment of the one-touch pipe connection device;

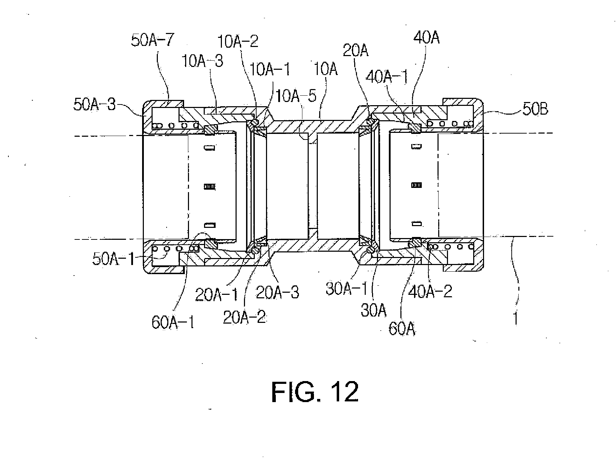

FIGs. 11 to 14 show embodiments capable of being obtained by modifying the one-touch pipe connection device;

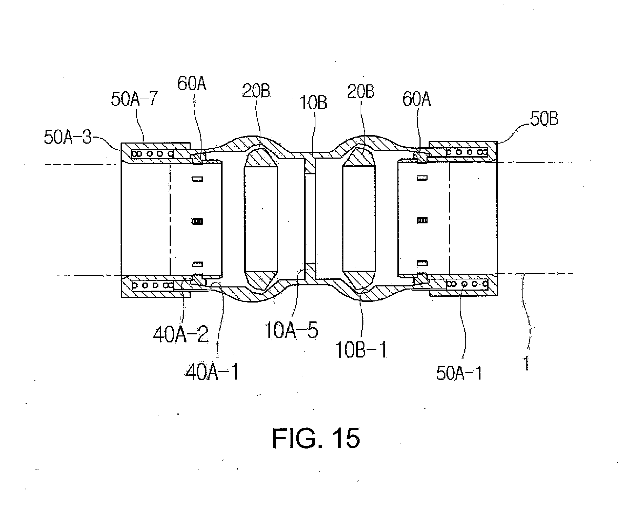

FIG. 15 shows still another embodiment of the one-touch pipe connection device;
FIG. 16 shows a construction of a tight contact element clamped by a rubber band in the one-touch pipe connection device;
FIG. 17 shows a construction in which a bracket is installed to the one-touch pipe connection device;
FIGs. 18 to 20 show embodiments, each of which employs a disengagement prevention feature between a push member and a fastening member in the one-touch pipe connection device; and
FIGs. 21 and 22 show other embodiments of the one-touch pipe connection device;
FIGS. 23 to 25 are views illustrating a one-touch pipe connection device according to a modified embodiment of the present invention;
FIGS. 26 and 27 are views illustrating a one-touch pipe connection device according to another modified embodiment of the present invention;
FIG. 28 is a view illustrating a first metal member applied to the one-touch pipe connection device according to the present invention; and
FIG. 29 is a view illustrating a third metal member applied to the one-touch pipe connection device according to the present invention.
FIGs. 30 and 35 show other embodiments of the one-touch pipe connection device.

### DETAILED DESCRIPTION OF THE EMBODIMENTS

Hereinafter, a preferred embodiment of the present invention will be described with reference to the accompanying drawings. In the following description and drawings, the same reference numerals are used to designate the same or similar components, and so repetition of the description on the same or similar components will be omitted.

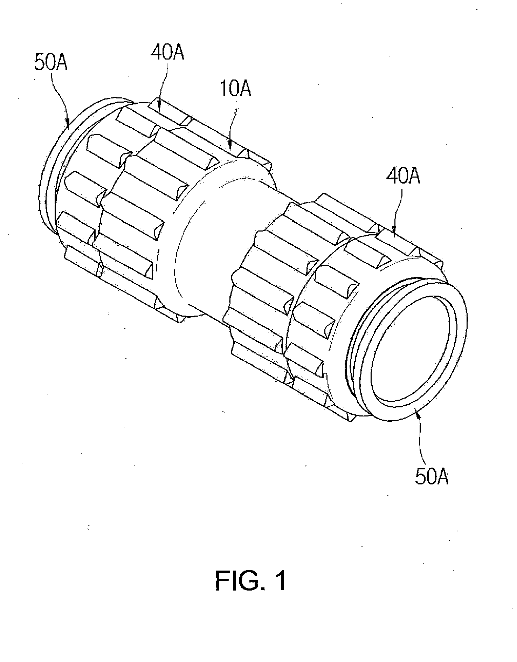

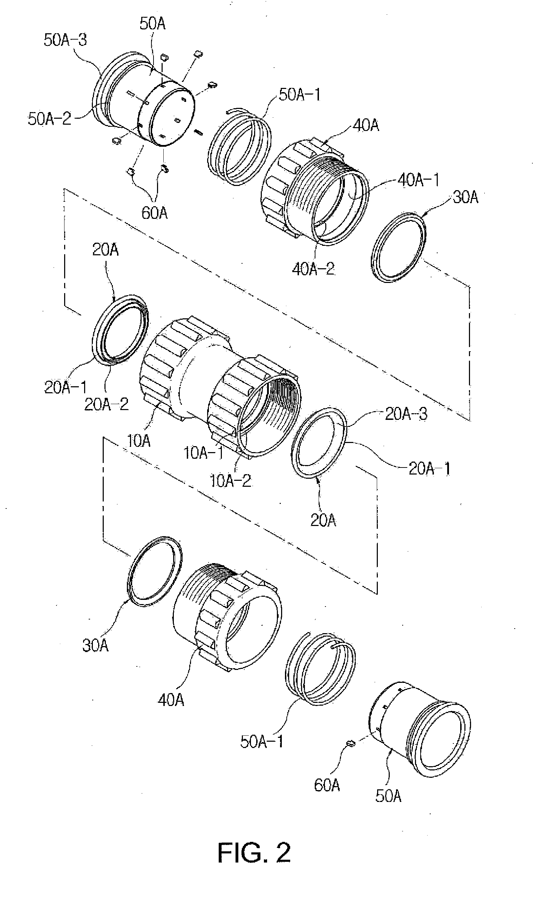

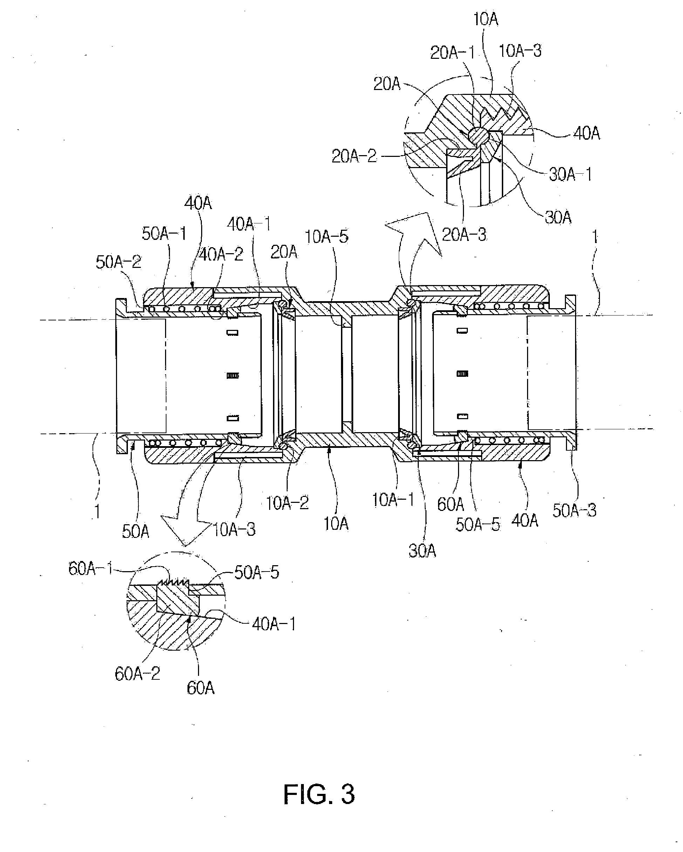

FIGs. 1 to 3 show an embodiment of the one-touch pipe connection device.

The present embodiment of the one-touch pipe connection device includes: a first body member 10A for receiving a pipe 1; a first fluid-tight member 20A positioned in each of left and right side of the inner peripheral surface of the first body member with reference to the longitudinal center of the inner peripheral surface 10A to ensure fluid-tightness; a support member 30A for linearly compressing the fluid-tight member 20A; a fastening member 40A screwed to the first body member 10A; a compression member 50A inserted into the fastening member 40A, and moved outwardly by a compression spring 50A-1; and a plurality of tight contact elements 60A provided on the compression member 50A tightly clamped on the outer peripheral surface of the pipe when the compression member 50A is moved.

The inner peripheral surface of the first body member 10A has a size for receive the pipe 1, in which the body member 10A includes, on each of left and right sides of the inner peripheral surface with reference to the longitudinal center of the inner peripheral surface, a stepped portion 10A-1, a first insertion groove 10A-2 formed vertically in relation to the stepped portion 10A-1, and a threaded portion 10A-3 formed to horizontally extend from the first insertion groove 10A-2, wherein the stepped portion 10A-1, the first insertion groove 10A-2 and the threaded portion 10A-3 are arranged in this order from the longitudinal center to each end of inner peripheral surface of the first body member 10A. Through this construction, the first body member 10A can receive or engage with the first fluid-tight member 20A, the support member 30A, the fastening member 40A, the compression members 50A, and the tight contact element 60A which are provided sequentially in each of the left and right sides of the inner peripheral surface thereof with reference to the longitudinal center of the inner peripheral surface, whereby the first body 10A can connect two pipes 1, wherein the components will be described in detail below.

The first body member 10A may take any of an elbow shape, a T shape, a branched shape (for allowing additional installation of pipes to the opposite lateral sides of a linear shape), etc. for diverting pipe-connecting directions besides a linear shape as shown in the drawings.

The first fluid-tight member 20A is a kind of packing formed from a rubber material, in which the first fluid-tight member 20A includes: a compression ring portion 20A-1 arranged along the first insertion groove 10A-2; a seating portion 20A-2 integrally extending from the compression ring portion 20A-1 and arranged on the stepped portion 10A-1; and an elastic portion 20A-3 slantingly extending from an end of the seating portion 20A-2 toward the center of the first body member 10A to come into tight contact with the pipe 1 along the outer peripheral surface of the pipe 1. When the pipe 1 is inserted, the elastic portion 20A-3 is deformed in the same direction by coming into tight contact with the pipe 1, and when fluid pressure is applied in the direction for disengaging the pipe 1, the elastic portion 20A-2 serves to prevent fluid-leakage, thereby ensuring fluid-tightness at a pipe-to-pipe connection part for fluid conveyance.

The support member 30A is formed from a synthetic resin material or a metallic material, and has a ring shape formed with a compression groove 30A-1 that comes into tight contact with the compression ring portion 20A-1. With this construction, when the first body member 10A and the fastening member 40A are engaged with each other, the compression ring portion 20A-1 comes into tight contact with the compression groove 30A-1, thereby preventing minute leakage from occurring in a gap between the stepped portion 10A-1 and the seating portion 20A-2. In addition, when the first body member 10A and the fastening member 40A are engaged with each other, the support member 30A can firmly compress the first fluid-tight member 20A in a linear direction thereby preventing the first fluid-tight member 20A from being physically damaged by a frictional force that may be applied to the first fluid-tight member 20A due to the rotation of the end of the fastening member 40A.

The fastening member 40A is adapted to compress the support member 30A by one end thereof by being screwed to the first body member 10A, in which the fastening member 40A has a slanted surface 40A-1 with an inner diameter increasing along the direction of inserting the pipe 1, and a stopper portion 40A-2 formed at the smallest-diameter end of the slanted surface.

With this construction, the fastening member 40A prevents the first fluid-tight member 20A and the support member 30A from being disengaged from the body member 10A, and enables one-touch connection of the pipe 1 in cooperation with the compressing member 50A and the tight contact elements 60A, in which the stopper portion 40A-2 is positioned following the smallest-diameter portion of the slanted surface 40A-1.

The compression member 50A is formed in a perforated shape to allow the pipe 1 to be inserted into the fastening member 40A, in which the compression member 50A has a first protrusion rib 50A-2 inserted into the fastening member 40A to form a closed space for arranging a compression spring 50A-1 together with the stopper portion 40A-2, and a second protrusion rib 50A-3 formed opposite to the first protrusion rib 50A-2 and exposed to the outside. The compression member 50A is inserted into the fastening member 40A, and the second protrusion rib 50A-3 is provided so as to allow the entirety of the compression member 50A to be easily pushed or pulled for assembling or disassembling the compression member 50A.

The tight contact elements 60A are installed at regular intervals on the compression member 50A positioned on the slanted surface 40A-1, in which the tight contact elements 60A have teeth 60A-1. As a result, when the pipe 1 is inserted into the first body member 10A, the teeth 60A-1 come into tight contact with the outer peripheral surface of the pipe 1 with the help of the restoring force of the compression spring 50A-1.

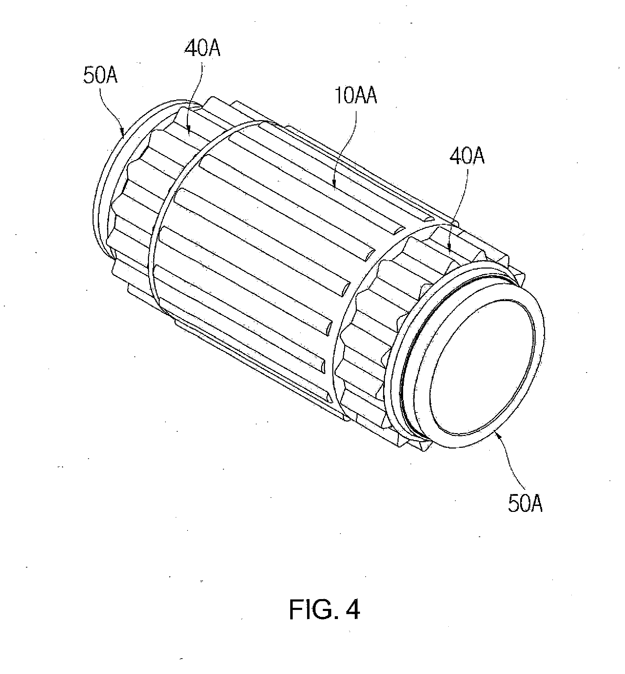

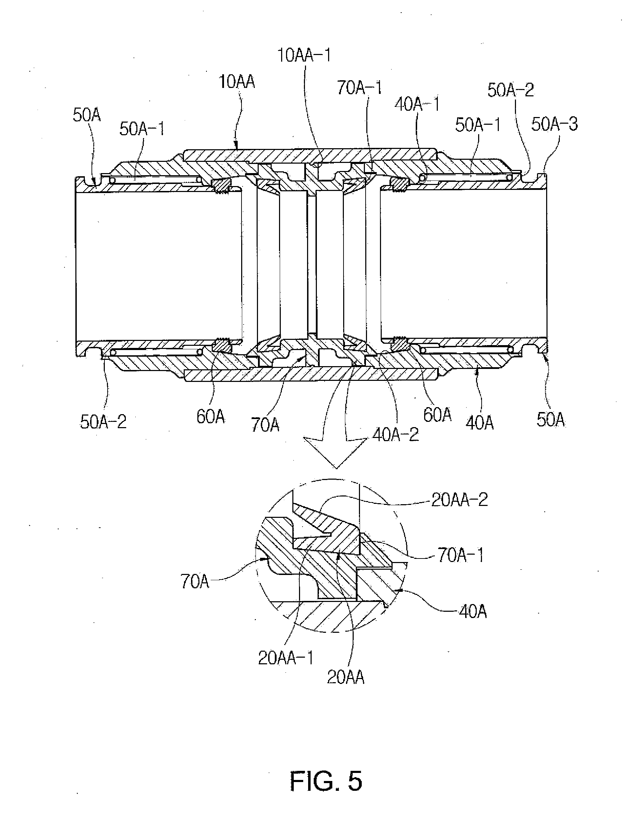

FIGs. 4 and 5 show another embodiment of the one-touch pipe connection device.

The one-touch pipe connection device in the present embodiment includes: a second body member 10AA, into which two pipes 1 are inserted; an insertion member 70A fixed to the second body member 10AA at the inner longitudinal center of the second body member 10AA; a pair of fluid-tight members 20AA arranged to be engaged with the opposite sides of the inner peripheral surface to ensure fluid-tightness; a pair of fastening member 40A screwed to the second body member 10AA to support the opposite sides of the insertion member 70A; a pair of compression members 50A inserted into the fastening members 40A, respectively, and each of the compression members being adapted to be moved outwardly by a compression spring 50A-1; and a plurality of tight contact elements 60A provided on each of the compression members 50A and coming into tight contact with the pipes 1 when the compression members 50A are moved outwardly.

The second body member 10AA has an inner peripheral surface with a size for receiving the pipes 1, and an anchoring protrusion 10AA-1 formed along the center of the inner peripheral surface, the inner peripheral surface being formed with threads on the opposite end areas thereof. This construction is provided in order to make it easy to fabricate the second body member 10AA with a simple shape, and to make it possible for the second fluid-tight members 20AA to be fixedly fitted in the second body member 10AA, by assembling the insertion member 70A with the second body member 10AA through the anchoring protrusion 10AA-1.

Here, it is sufficient if the anchoring protrusion 10AA-1 has a size allowing the clamping or escaping of the insertion member 70A in order that the insertion member 70A can be arranged at the center of the second body member 10AA.

The insertion member 70A is inserted into the second body member 10AA and fixed along the stopping protrusion 10AA-1 at the central area thereof, and the insertion member 70A has a pair of second insertion grooves 70A-1 which are formed at the opposite sides of the inner peripheral surface of the insertion member 70A, respectively, so that the second fluid-tight members 20AA are fixed along the insertion grooves 20AA, respectively. The insertion member 70A is fixed in a state in which the insertion member 70A cannot be moved within the inside of the second body member 10AA by the fastening members 40A coupled to the second body member 10AA, and no physical force, such as frictional force, can be transferred to the second fluid-tight members 20AA, thereby preventing the damage of the second fluid-tight members 20AA.

The second fluid-tight members 20aa are a kind of packing formed from a rubber material, in which each of the second fluid-tight members 20AA includes a fixed portion 20AA-1 fixedly fitted in one of the second insertion grooves 70A-1, and an elastic portion 20AA-2 slantingly extending from an end of the fixed protrusion 20AA-1 toward the longitudinal center of the second body member 10AA to come into tight contact with a pipe 1 along the outer peripheral surface of the pipe 1. When the pipe 1 is inserted, each of the elastic portions 20A-3 is bent in the same direction by coming into tight contact with the pipe 1, and when fluid pressure is applied in the direction for disengaging the pipe 1, each of the elastic portions 20A-2 serves to prevent fluid-leakage, thereby ensuring fluid-tightness at a pipe-to-pipe connection part for fluid conveyance.

The fastening members 40A are adapted to compress the insertion member 70A by the ends thereof by being screwed to the second body member 10AA, in which each of the fastening member 40A has a slanted surface 40A-1 with an inner diameter increasing along the direction of inserting the pipe 1, and a stopper portion 40A-2 formed at an end of the slanted surface. Because the fastening members 40A, the compression members 50A and the tight contact elements 60A are similar to or the same with those of the previously described embodiment in terms of construction and function, the detailed descriptions will be omitted.

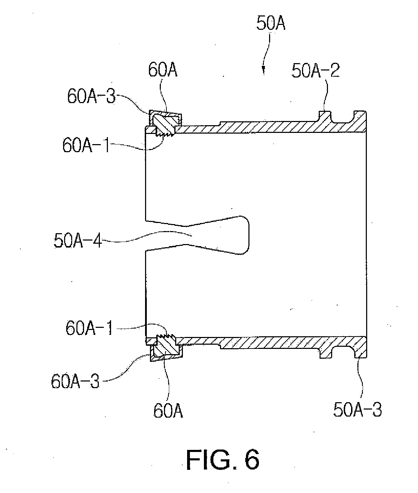

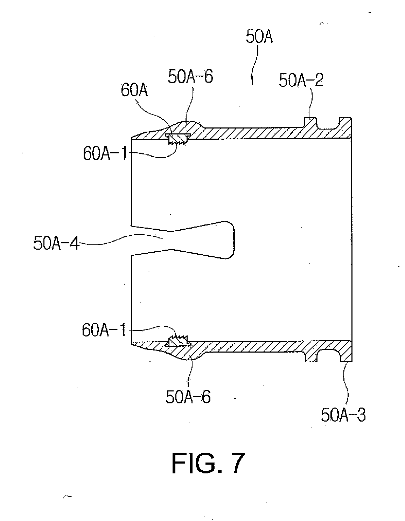

Now, methods of installing the tight contact elements 60A will be described with reference to FIGs. 6 and 7. At first, insertion holes 50A-5 for fixedly inserting the tight contact elements 60A are formed in each of the compression members 50A, and then the tight contact elements 60A are inserted into the insertion holes 50A-5, respectively, in which each of the tight contact elements 60A is provided with a protrusion piece 60A-2 which is supported by the corresponding slanted surface 40A-1 so as to make the teeth 60A-1 come into tight contact with the outer peripheral surface of a pipe 1 with the help of the restoring force of the corresponding compression spring 50A-1 when a pipe 1 is inserted. Here, it is desirable to design the length and shape of the tight contact elements 60A in consideration of the insertion holes 50A-5 in such a manner that the tight contact elements can be fixedly fitted in the insertion holes 50A-5 only when each of the tight contact elements 60A is inserted into one of the insertion holes 50A-5 in a predetermined direction: this is desirable in order to prevent the orientation of the teeth 60A-1 from being reversed in the process of assembling the tight contact elements because the orientation of the teeth 60A-1 may be reversed in correspondence to the installing direction of each of the tight contact elements 60A when the teeth 60A-1 of the tight contact elements 60A are adapted to be inclined in the direction of inserting the pipe 1 so as to make the teeth 60A-1 come into contact with the pipe 1 more preferably.

For reference, a method of inserting the tight contact elements 60A into the insertion holes 50A-5 of each of the compression members 50A is conducted as follows. An external force is applied, toward the internal longitudinal center, to a part of the end of the compression member 50A inserted into a first or second body member 10A or 10AA by using a tool, so that the insertion hole-formed area is bent, in which state each of the tight contact elements 60A is inserted into one of the insertion holes 50A-5 through a spaced gap formed by bending the insertion hole-formed area, thereby allowing the tight contact element 60A to be moved only within a space formed between the slanted surface 40A-1 and the pipe 1 from the stopper portion 40A-2. In order to install the tight contact elements 60A in this manner, the insertion hole-formed area in each of the compression members 50A should have a proper elastic flexibility. Therefore, if the compression members 50A are formed from a metallic material or a synthetic resin material, the size of each of the compression members 50A should be properly determined so that the insertion hole-formed areas have a proper elastic flexibility to allow the areas to be returned to the original states thereof after they are inwardly bent.

Another method of installing the tight contact elements 60A is conducted as follows. Each of the compression members 50A is formed with a plurality of slits 50A-4, which are spaced apart from each other and extend longitudinally from the end opposite to the second protrusion rib 50A-3, so as to make the slit-formed area have an elastic flexibility. As a result, each of the compression members 50 can be partially bent to make the contact members 60A be capable of being positioned on the corresponding slanted surface 40A-1, even when each of the compression members 50A is inserted into the first or second body member 10A or 10AA to make the tight contact elements 60 come into contact with the corresponding stopper portion 40A-1 in a state in which the tight contact elements 60A are fixedly fitted in the compression member 50A in advance, whereby it is possible to solve the problem of complexity in installing the tight contact elements 60A in the above-mentioned installation method.

In addition, an annular rubber band 60A-3 may be additionally provided so as to entirely surround the tight contact elements 60A fitted in each of the compression members 50A so as to prevent the tight contact elements 60A from escaping from the insertion holes 50A-5. As such, the rubber band 60A-3 is capable of clamping the tight contact elements 60A by its elastic force, and is variable in size in cooperation with the slit-formed area of the corresponding compression member 50A.

In consideration of the method of installing the tight contact elements 60a in each of the compression members 50A, it is possible to make the tight members 60A be partially embedded in each of the compression members 50A at the time of injection-molding the corresponding compression member 50A, and to form convex portions 50A-6 that are supported by the corresponding slanted surface 40A-1 to allow the teeth 60A-1 of the tight contact elements 60A, which are partially embedded in the corresponding compression member 50A, to come into tight contact with the pipe 1, i.e. to provide convex portions 50A-6 conducting the same function with the protrusion pieces 60A-2 on the compression members 50A, whereby the step of fitting the tight contact elements 60a in the insertion holes 50A-5 can also be omitted.

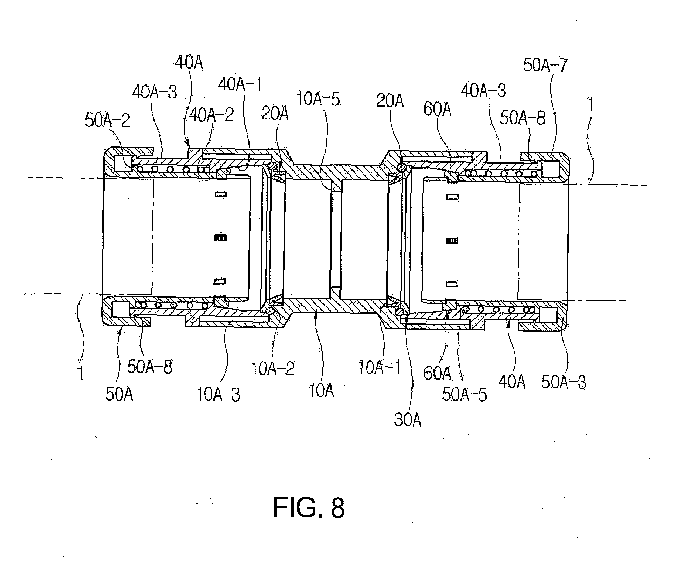

In order to prevent subsequent maintenance and repair works from becoming difficult as foreign matter is introduced into the gaps between the fastening members 40A and the compression members 50A when the connection device is embedded underground or into a wall, the connection device may further include cover parts 50A-7, each of which extends from the end portion of one of the second protrusion ribs 50A-3 to cover the corresponding fastening member 40A along the circumference of the end portion as shown in FIG. 8.

By forming one or more escape prevention protrusions 50A-8 on the inner peripheral surface of each of the cover parts 50A-7, and forming a recessed portion 40A-3 on the outer peripheral surface of each of the fastening members 40A so as to allow the corresponding compression member 50A to be moved within a predetermined extent by forcedly fitting the escape prevention protrusions 50A-8 on the recessed portion, it is possible to prevent the disengagement of the pipe connection device. Alternatively, such escape prevention construction by the escape prevention protrusions 50A-8 and the recessed portion 40A-3 may be applied to the end portion of each of the first protrusion rives 50A-2 and the inner peripheral surface of each of the fastening members 40A.

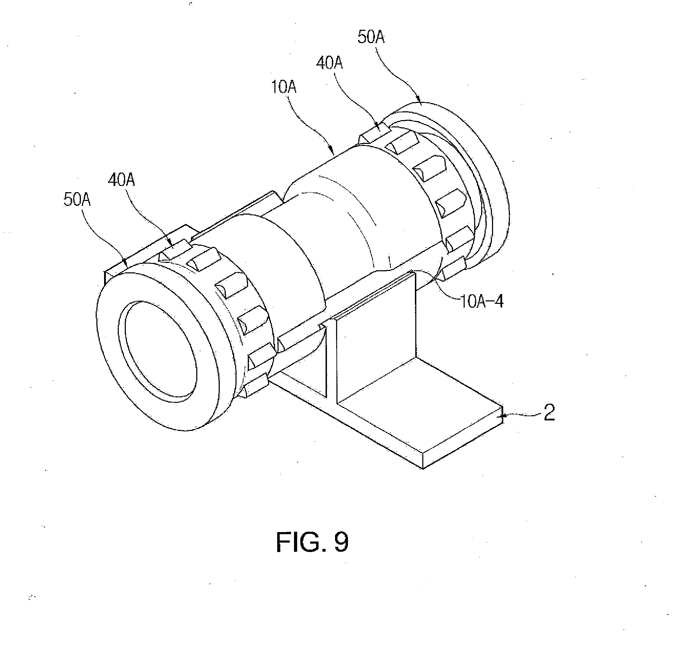

Referring to FIG. 9, to make the connection device capable of being maintained in a state of being strongly fixed to a conventional elastic bracket 2 anchored to a wall or a floor to anchor a cylindrical member, one or more anchoring ribs 10A-4 may be formed on the outer peripheral surface of at least one of the first body member 10A and the fastening member 40A, in such a manner that one or more end portions of the elastic bracket 2 can be engaged with and anchored to the anchoring ribs 10A-4, in which the anchoring ribs 10A-4 may be preferably provided with openings or grooves for anchoring the end portions of the elastic bracket 2.

In addition, the first body member 10A is provided with an insertion-limiting rib 10A-5 on the inner peripheral surface thereof having a linearly extending area so as to allow the pipes 1 to be inserted into the first body member 10A by the same length from each end of the first body member 10A. As a result, the pipes oppositely arranged in the first body member 10A can remain in the equally anchored state.

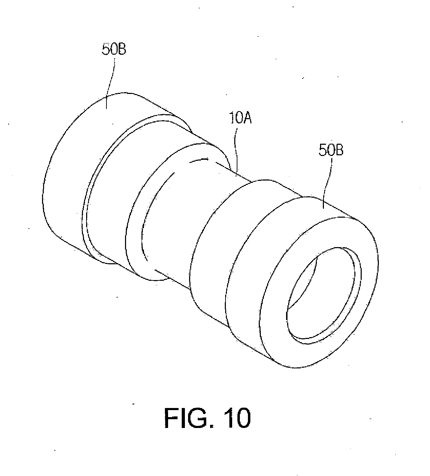

FIG. 10 shows another embodiment of the one-touch pipe connection device including: a first body member 10A for receiving pipes 1; a pair of first fluid-tight members 20A oppositely arranged in the first body member 10A with reference to the central part of the first body member 10A to ensure fluid-tightness; a pair of support members 30A for linearly compressing the first fluid-tight members 20A, respectively; a pair of fastening members, each of which is screwed to the first body member 10A; a pair of push members 50B inserted into the fastening members 40A, respectively, each of the push members 50B being outwardly moved by a compression spring 50A-1; and a pair of tight contact elements 60A provided on the push members 50B to come into tight contact with the push members 50B when the push members 50B are moved.

The first body member 10A has a size to receive the pipes 1, in which the first body member 10A includes, on each longitudinal half of the inner peripheral surface in order from the central part to each end of the body member: a stepped portion 10A-1, a first insertion groove 10A-2 formed vertically in relation to the stepped portion 10A-1, and a threaded portion 10A-3 formed to horizontally extend from the first insertion groove 10A-2. With this construction, the first body member 10A receives or engages with the first fluid-tight members 20A, the support members 30A, the fastening members 40A, the push members 50B and the tight contact elements 60A to interconnect two pipes 1, in which the components will be described in detail below.

For changing the interconnecting direction of the pipes 1, the first body member 10A may be formed in an elbow shape, a T shape, a branched shape (that allows plural pipes to be additionally installed to the opposite sides of a linearly shaped body member), or the like.

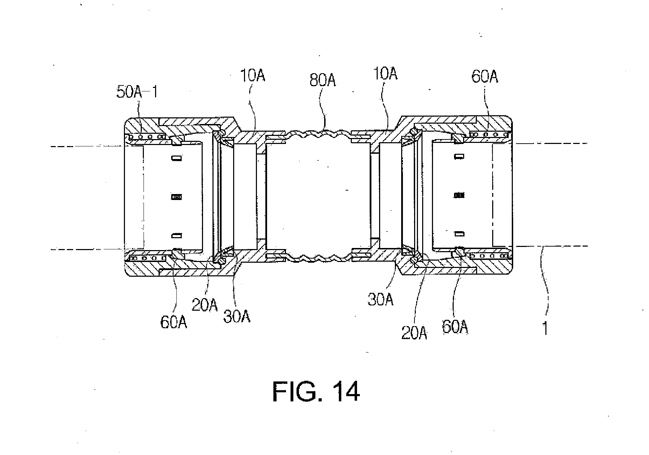

In addition, as shown in FIG. 14, the first body member 10A may be divided into two halves with reference to its central part, and the divided halves of the first body member 10A may be interconnected by a corrugated tube 80A, the opposite ends of which are embedded, through an insert-molding process, in the divided halves of the first body member 10A, respectively. With this construction, it is possible to provide a pipe which is very convenient to change the interconnecting direction of the pipes 1. Here, in order to prevent the corrugated tube 80A from escaping from the halves after the insert-molding process, it is desirable to form openings or uneven portions on the parts of the corrugated tubes to be embedded in the halves. Since the construction of the corrugated tube 80A is well-known in the art, the detailed description thereof will be omitted.

Each of the first fluid-tight members 20A is a rubber packing including: a compression ring portion 20A-1 arranged along the corresponding first insertion groove 10A-2, a seating portion 20A-2 integrally extending from the corresponding compression ring portion 20A-1 and arranged on the corresponding stepped portion 10A-1, and an elastic portion 20A-3 slantingly extending from an end of the seating portion 20A-2 toward the central part of the first body member 10A to come into tight contact with the pipe 1 along the outer peripheral surface of the corresponding pipe 1. With this construction, when a pipe 1 is inserted, the elastic portion 20A-3 is bent in the same direction as the pipe 1 by coming into close contact with the pipe 1, and when a fluid pressure is applied to the pipe 1 in the direction of disengaging the pipe 1, the elastic portion 20A-3 functions to prevent the leakage of fluid, thereby ensuring fluid-tightness at the pipe-to-pipe connection part for conveying fluid.

For reference, the first fluid-tight members 20A may be additionally compressed by the support members 30A after they are anchored to the first body member 10A.

Each of the support members 30A is formed in a ring shape from a plastic or metallic material to have a compression groove 30A-1 that comes into tight contact with the compression ring portion 20A-1 of the corresponding first fluid-tight member 20A. With this construction, the compression ring portions 20A-1 come into tight contact with the compression grooves 30A-1, respectively when the first body member 10A and the fastening members 40A are engaged with each other, thereby preventing even tiny leakage from occurring at the gaps formed between the stepped portions 10A-1 and the seating portions 20A-2. In addition, each of the first fluid-tight members 20A can be compressed merely in a linear direction to prevent the first fluid-tight members 20 from being physically damaged by a frictional force that may be applied to each of the first fluid-tight members 20A if the ends of the fastening members 40A are rotated when the first body member 10A and the fastening members 40A are engaged with each other.

Each of the fastening members 40A is adapted to compress the corresponding support member 30A by one end thereof by being screwed to the first body member 10A, in which each fastening member 40A has a slanted surface 40A-1 with an inner diameter increasing along the direction of inserting the corresponding pipe 1, and a stopper portion 40A-2 formed at an end of the slanted surface 40A-1.

With the above-mentioned construction, the fastening members 40A are adapted to prevent the first fluid-tight members 20A and the support members 30A from being disengaged from the first main body 10A, and enable one-touch connection of the pipes 1 in cooperation with the push members 50B and the tight contact elements 60A, in which the stopper portions 40A-2 are positioned at the smallest diameter portions of the slanted surfaces 40A-1, respectively, as shown FIG. 14.

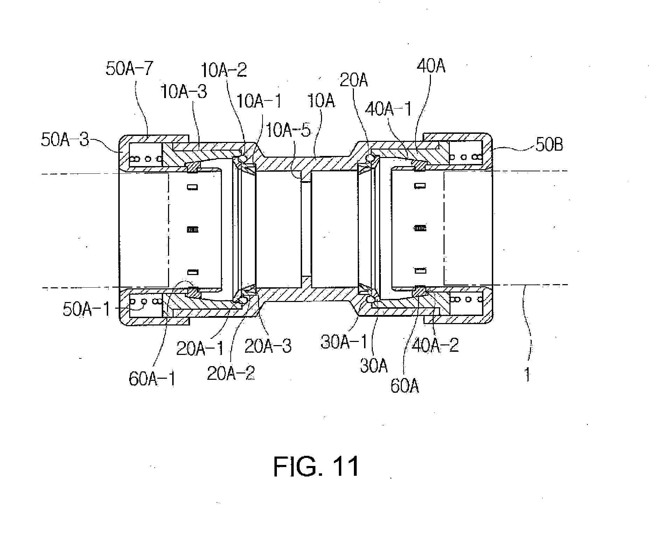

Referring to FIGs. 11 and 14, each of the push members 50B has a punched shape to receive a pipe 1, and is partially inserted into one of the fastening members 40A, in which each push member 50B has a second protrusion rib 50A-3 provided at an end of the push member 50B to be exposed to the outside to allow a compression spring 50A-1 to be arranged between the second protrusion rib 50A-3 and an end of the fastening member 40A or the stopper portion 40A-2, whereby the moving space of the push member 50B is also used as a space for arranging the compression spring 50A-1. As a result, the entire length of the connection device can be reduced as compared to a construction in which the compression springs 50A-1 are positioned within the fastening members 40A. Here, the second protrusion ribs 50A-3 also serve to allow the push members 50B to be easily installed or disassembled by compressing or pulling the entirety of the push members 50B.

The tight contact elements 60A are installed at regular intervals on each of the compression members 50A positioned on the slanted surfaces 40A-1, and each of the tight contact elements 60A is provided with teeth 60A-1. As a result, when pipes 1 are inserted into the first body member 10A, the teeth 60A-1 come into tight contact with the outer peripheral surfaces of the pipes 1 with the help of the restoring force of the compression springs 50A-1.

Meanwhile, another embodiment of the one-touch pipe connection device includes a body member 10B for receiving pipes 1, a pair of packing members 20B arranged to be opposite to each other with reference to the central part of the body member 10B to ensure fluid-tightness, a pair of push members 50B inserted into the body member 10B to be moved to the outside by compression springs 50A, respectively, and tight contact elements 60A installed on the push members 50B to come into contact with the outer peripheral surfaces of the pipes when the push members 50B are moved.

The body member 10B includes: a pair of recessed portions 10B-1 formed by recessing the inner peripheral surface of the body member 10B; a pair of slanted surfaces 40A-1, each of which has an inner diameter increasing in the direction of inserting a pipe 1; and a pair of stopper portions 40A-2, each of which is formed at an end of the slanted surface, in which the recessed portions 10B-1, the slanted surfaces 40A-1 and the stopper portions 40A-2 are symmetrically arranged on the inner peripheral surface of the body member 10B with reference to the central part of the body member 10B in this order.

As the body member 10B takes a construction in which the first member 10A and the fastening members 40A of the previously described embodiments are integrated with each other and the recessed portions 10B-1 for installing the packing members 20B, it is possible to omit the process of assembling the first body member 10A and the fastening members 40A.

Each of the packing members 20B is an annular packing member that is inserted into the body member 10B by being deformed by an external force, and comes into tight contact with the inside of the corresponding recessed portion 10B-1. As a result, when a fluid pressure is applied to the opposite sides of the body member 10B, the packing members 20B come into tight contact with the pipes 1, thereby providing fluid-tightness.

Because the push members 50B and the tight contact elements 60A of the present invention are the same with those of the previously described embodiments, the detailed descriptions thereof will be omitted.

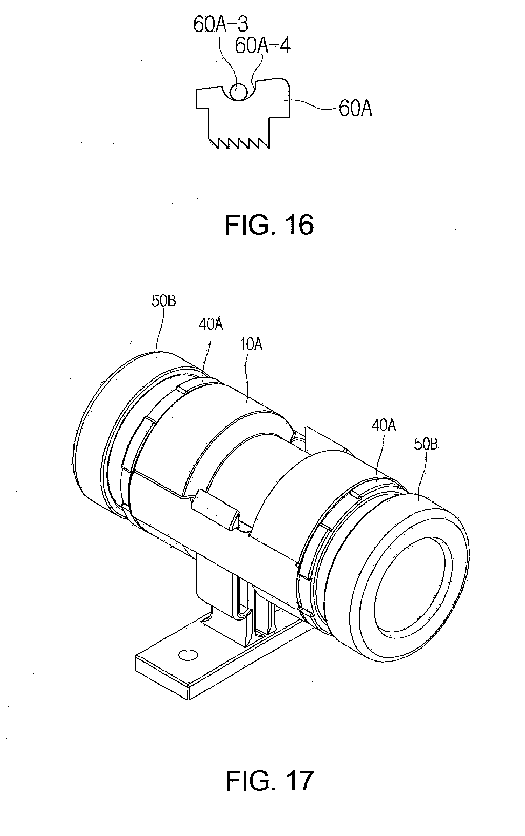

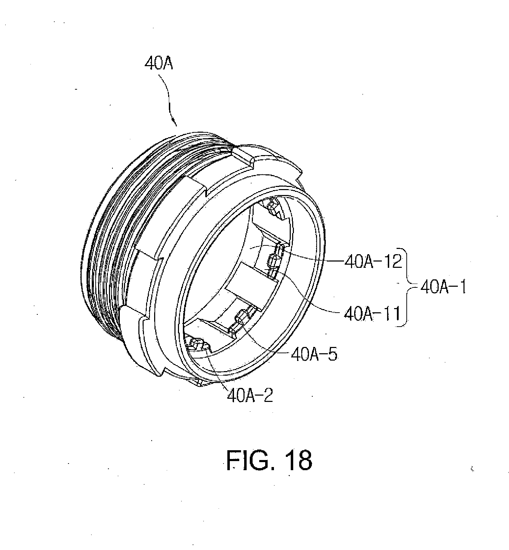

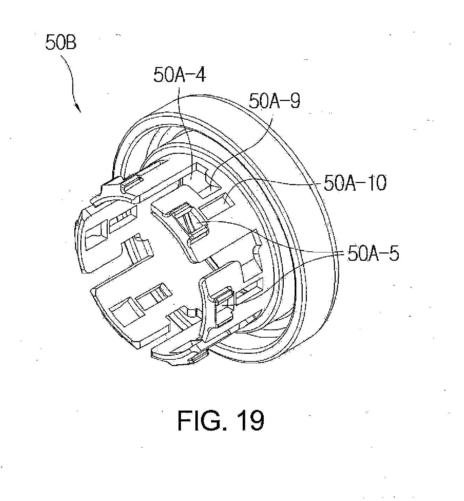

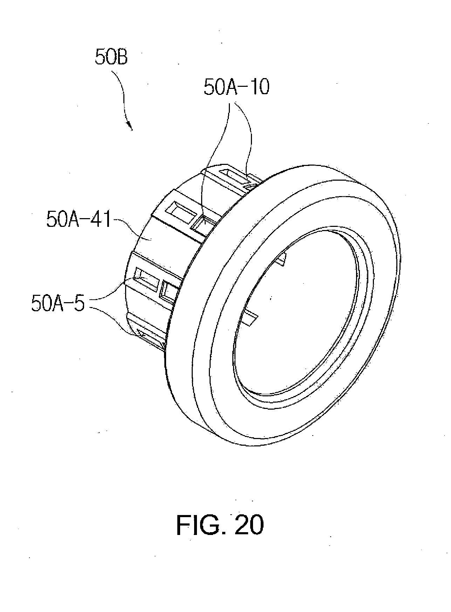

Referring to FIGs. 17 to 20, the first body member 10A is adapted to be fastened to a conventional bracket anchored to a wall, in which each compression member 50A of the above-described embodiments is formed with a plurality of slits 50A-4 spaced apart from each other and extending longitudinally from the end opposite to the second protrusion rib 50A-3 of the push member 50B, so that the slit-formed area of the push member 50B can be elastically deformed. This is to make the push member 50B be partially deformed to allow the tight contact elements 60A to be positioned on the corresponding slanted surface 40A-1, even if the tight contact elements 60A come into contact with the corresponding stopper portion 40A-2 when the push member 50B is pushed into the first body member 10A or the body member 60A in a state in which the tight contact elements 60A are fitted on the push members 60A in advance.

Now, a method of fitting the tight contact elements 60A will be described with reference to the drawings. A plurality of insertion holes 50A-5 are formed in each of push member 50B, in which the tight contact elements 60A are fixedly inserted into the insertion holes 50A-5 in such a manner that when a pipe 1 is inserted, the teeth 60A-1 come into tight contact with the outer peripheral surface of the pipe 1 with the help of the restoring force by of the corresponding compression spring 50A-1. Here, it is desirable to design the length and shape of the tight contact elements 60A in consideration of the insertion holes 50A-5 in such a manner that the tight contact elements 60A can be fixedly fitted in the insertion holes 50A-5 only when each of the tight contact elements 60A is inserted into one of the insertion holes 50A-5 in a predetermined direction. This is desirable in order to prevent the orientation of the teeth 60A-1 from being reversed in the process of assembling the tight contact elements because the orientation of the teeth 60A-1 may be reversed in correspondence to the installing direction of each of the tight contact elements 60A when the teeth 60A-1 of the tight contact elements 60A are adapted to be inclined in the direction of inserting the pipe 1 so as to make the teeth 60A-1 come into contact with the pipe 1 more preferably.

Preferably, each of the tight contact elements 60A has a shape with a height gradually increasing in the diameter increasing direction of the slanted surface 40A-1, and the slanted surface 40A-1 includes a slowly slanted surface 40A-11 (the surface formed following the stopper portion 40A-2) that allows each of the tight contact elements 60A to come into tight contact with the pipe 1, and a rapidly slanted surface 40A-12 for providing a space that allows the teeth 60A-1 of the tight contact elements 60A to be pivoted to the outside of insertion holes 50A-5 so that the teeth 60A-1 do not come into tight contact with the pipe 1. With this construction, when the push member 50B is pressed toward the first body member 10A, the teeth 60A-1 of the tight contact elements 60A are positioned in the space between the rapidly slanted surface 40A-12 and the pipe 1, thereby allowing the pipe 1 to be disengaged. To the contrary, when the push member 50B is moved to the outside, the protrusion pieces 60A-2 of the tight contact elements 60 are press-fitted between the slowly slanted surface 40A-11 and the pipe 1, thereby preventing the pipe 1 from being disengaged.

In order to minimize the escaping of the tight contact elements from the insertion holes 50A-5, the surrounding part of the insertion holes 50A-5 of each push member 50B may be reinforced to such an extent that the surrounding parts do not exceed the height of the protrusion pieces 60A-2 to increase the contact area between the tight contact elements 60A and the insertion holes 50A-5. As shown in FIG. 16, each of the protrusion pieces 60A-2 may be formed with a seating groove 60A-4, and the tight contact elements 60A fitted in a circular arrangement on the push member 50B can be fixed by an annular rubber band 60A-3 installed along the seating grooves 60A-4 of the protrusion pieces 60A-2, in which the rubber band 60A-3 is variable in size together with the slit-formed area, so that the rubber band 60A-3 does not hinder the contact of the tight contact elements 60A to the corresponding slanted surface 40A-1.

In addition, in order to prevent subsequent maintenance and repair works from becoming difficult as foreign matter is introduced into the gaps between the fastening members 40A and the compression members 50A when the connection device is embedded underground or into a wall, the connection device may further include cover parts 50A-7, each of which extends from the end portion of one of the second protrusion ribs 50A-3 to cover the corresponding fastening member 40A along the circumference of the end portion as shown in FIG. 8.

Moreover, by forming one or more escape prevention protrusions 50A-8 on the inner peripheral surface of each of the cover parts 50A-7, and forming a recessed portion 40A-3 on the outer peripheral surface of each of the fastening members 40A so as to allow the corresponding compression member 50A to be moved within a predetermined extent by forcedly fitting the escape prevention protrusions 50A-8 on the recessed portion, it is possible to prevent the disengagement of the pipe connection device. As another construction for preventing the push members 50B from being disengaged from the fastening members, it is possible to form a plurality of slots 50A-10 between the insertion holes 50A-5 and the second protrusion rib 50A-3 of each push member 50B, and to form a plurality of movement-limiting protrusions 40A-5 on the stopper portion 40A-2 of each fastening member 40A to be inserted into the slots 50A-10 (in the form of openings or grooves), so that when the push member 50B is partially deformed and introduced into the fastening member 40A, the movement-limiting protrusions 40A-5 can be positioned in the slots 50A-10, respectively, thereby prevent the disengagement of the push member 50B while the push member 50B is linearly moved. Here, the slots 50A-10 are preferably formed by a distance for introducing the push member 50B into the fastening member 40A toward the second protrusion rib 50A-3 of the push member 50B from the positions of the movement-limiting protrusions 40A-5.

Here, although it is possible to make the movement-limiting protrusions 40A be directly positioned in the slots 50A-10 while the push member 50B is being partially deformed and introduced into the fastening member 40A as described above, it may be somewhat complicated to make the movement-limiting protrusions 40A-5 be positioned in the slots 50A-10 simultaneously with pushing the push member 50b into the fastening member 40A. Therefore, it is possible to form a plurality of reversely slanted surfaces 40A-4 with a slanted direction opposite to that of the slanted surface 40A-1 to extend from the stopper portion 40A-2 toward the slanted surface 40A-4 to correspond one-on-one with the tight contact elements 60A, and to form a sliding surface 50A-9 inclined upwardly toward an adjacent slot 50A-10 in each of the slits 50A-4 of the push member 50A. With this construction, it is possible to make the movement-limiting protrusions 40A-5 be more easily positioned in the slots 50A-10 by inserting the tight contact elements 60A into the fastening member 40A to come into contact with the reversely slanted surface 40A-4, and then rotating the fastening member 40A or the push member when the movement-limiting protrusions 40A-5, the sliding surfaces 50A-9 and the slots 50A-10, which are arranged along the slits 50A-4, are linearly positioned.

In order to make a part of each push member 50B have elastic flexibility, the push member 50A may be provided with one or more thickness-reduced parts 50A-41 instead of the slits 50A-4. If the fastening member 40A formed with the reversely slanted surfaces 40A-4, which have a slanted direction opposite to that of the slanted surface 40A-1, which correspond one-on-one to the tight contact elements 60A fitted on the push member 50B as described above, and which extend from the stopper portion 40A-2 toward the slanted surface 40A-4, is engaged with the push member 50B with the above-mentioned thickness-reduced, it is possible to make the movement-limiting protrusions 40A-5 be smoothly positioned in the slots 50A-10, respectively, without the above-mentioned sliding surfaces 50A-9, by rotating the fastening member 50A or the push member 50B.

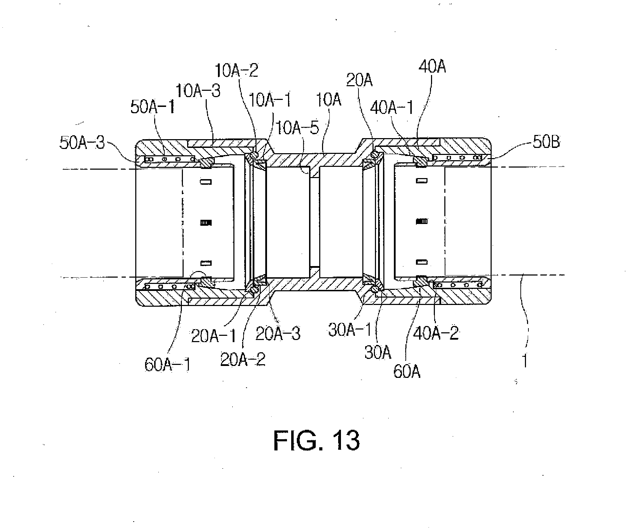

As another method for preventing foreign matter from being interposed between the fastening member 40A and the push member 50B, it is possible to make the second protrusion rib 50A-3 of the push member 50B be enclosed by the fastening member 40A as shown in FIG. 13 in such a manner that the second protrusion rib 50A-3 is exposed to the outside. If the second protrusion rib 50A-3 is protected by the fastening members 40A in this manner, it is desirable to use a separate tool which can press the second protrusion rib 50A-3 from the outside when disengaging a pipe 1 from the connection device.

In addition, the first body member 10A or the body member 10B may be provided with an insertion-limiting rib 10A-5 that allows pipes to be inserted by the same length from the opposite ends of the body member 10A or 10B. With this construction, the pipes 1 can be inserted into the first body member 10A or the body member 10B by a predetermined length, whereby the pipes 1 arranged in the opposite ends of the first body member 10A or the body member 10B can be anchored over the same length.

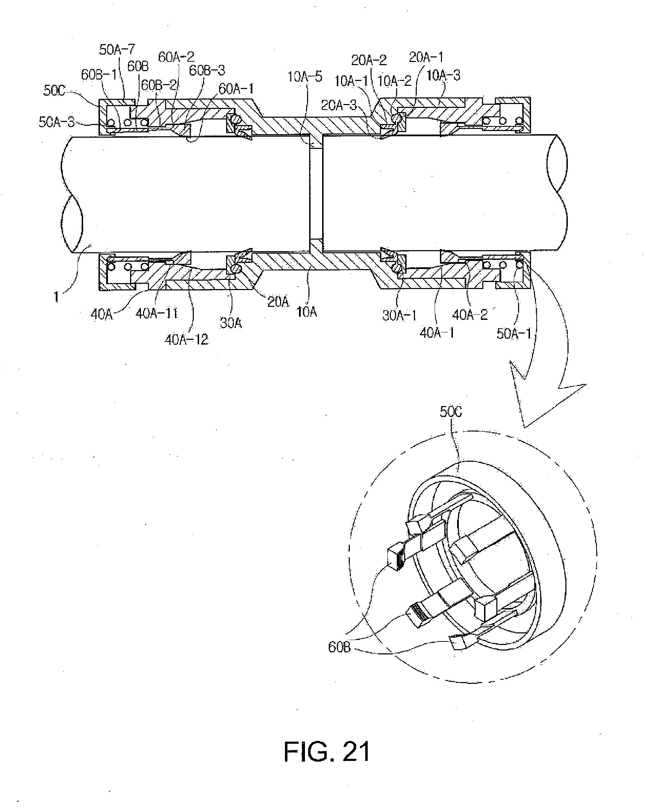

Another embodiment of the one-touch pipe connection device as shown in FIG. 21 includes a first body member 10A for receiving pipes 1; a pair of first fluid-tight members 20A oppositely arranged with reference to the central part of the first member 10A to ensure fluid-tightness; a pair of support members 20A for linearly compressing the first fluid-tight members 20A, respectively; a pair of fastening members 40A screwed to the first body member 10A a pair of compression members 50C inserted into the fastening members 40A, respectively, each of the compression members 50C being moved to the outside by a compression spring 50A-1, and a plurality of first clamp members 60B, each of which is fixed to the corresponding compression member 50C, so that the first clamp members 60B are tightly engaged with and clamped to the outer peripheral surface of the corresponding pipe 1 when the compression member 50C is moved.

Because the first body member 10A, the first fluid-tight members 20A, the support members 30A, and the fastening members 40A are the same with those described above, the detailed descriptions thereof will be omitted.

Each compression member 50C is centrally punched so that a pipe 1 can be inserted into the compression member 50, and the first clamp members 60B to be described in detail below are circularly arranged and fixed to the compression member 60C, so that a pipe 1 can be clamped to or separated from the first clamp members 60B, in which the compression member 50C has a second protrusion rib 50A-3 positioned in the outside to allow a compression spring to be arranged between the second protrusion rib 50A-3 and the stopper portion 40A-2 of the corresponding fastening member 40A. In addition, the compression member 50C further includes a cover part 50A-7 which extends from the outer peripheral surface of the second protrusion rib 50A-3 to cover the fastening member 40A around the end of the fastening member 40A in order to prevent subsequent maintenance and repair works from becoming difficult as foreign matter is introduced into a gap between the fastening member 40A and the compression members 50C when the connection device is embedded underground or into a wall.

Each of the first clamp members 60B includes: an extension part 60B-1, one end of which is fixed to one side of the compression member 50C; an elastic part 60B-2 extending from the extension part 60B-1 toward a slanted surface 40A-1 formed in the fastening member 40A; and a clamp part 60B-3 having teeth 60A-1 adapted to come into tight contact with the pipe 1 and a protrusion piece 60A-2 adapted to be supported by the slanted surface 40A-1, the clamp part 60B-3 being integrally connected to the elastic part 60B-2, wherein the first clamp members 60B are provided in a circular arrangement to be engaged with and to clamp the pipe 1 with the help of the restoring force of the compression spring 50A-1 when the pipe 1 is inserted into the first body member 10A.

Since each of the first clamp members 60B is generally formed in a strip shape, the first clamp members 60B can be conveniently mass-produced through press processing when they are formed from a metallic material. In addition, since the first clamp members 60B make it possible to avoid a complicated process to install the clamp parts 60B-3, which practically clamp the pipe 1, on one or more separate components, the productivity of the final products can be improved and the assembling process thereof can be simplified.

Here, the extension parts 60B-1 and the compression member 50C may be fixed to each other through insert molding, welding or the like, or merely by fitting the extension parts 60B-1 to the compression member 50C. Preferably, each of the elastic parts 60B-2 has a proper elastic force and size to allow the clamp parts 60B-3 to be moved in a space between the pipe 1 and the slanted surface 40A-1 in correspondence to the moving direction of the compression member 50C, so that the clamp parts 60B-3 can be engaged with or disengaged from the pipe 1.

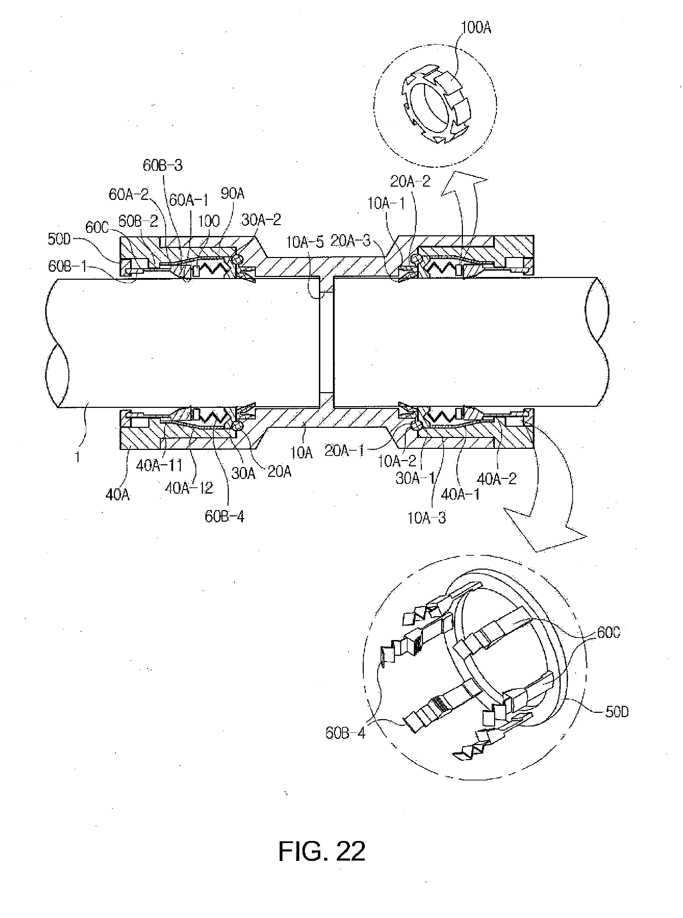

Another embodiment of the one-touch pipe connection device as shown in FIG 22 includes: a first body member 10A into which two pipes are inserted; a pair of first fluid-tight members 20A arranged opposite to each other with reference to the central part of the first member 10A to ensure fluid-tightness; a pair of support members 30A for linearly compressing the fluid-tight members 20A, respectively; a pair of fastening members 40A screwed to the first body member 10A; a pair of push members 50D, each of which is arranged inside or outside of one of the fastening members 40A to be pushed in the direction of the corresponding pipe 1; and a plurality of second clamp members 60C, each of which is fixed to the corresponding push member 50D at one end thereof when the push member 50D is moved opposite to the direction of inserting pipe 1, so that the second clamp members 60C allow the pipe 1 to be clamped or separated depending on the moving direction of the push member 50D.

Because the first body member 10A, the first fluid-tight members 20A, the support members 30A and the fastening members 40A are the same with those of the above-mentioned embodiments, the detailed descriptions thereof will be omitted.

Each push member 50D is connected to the second clamp members 60C in such a manner that when a pipe 1 is pushed in the insertion direction by an external force, the push member 50D allows the pipe 1 to be disengaged, and is moved to the direction opposite to the pipe insertion direction by the elastic force exerted by the second clamp members 60C, in which the push member 50D and the second clamp members 60C are fixed to each other through insert-molding, welding, fitting or the like.

Each of the second clamp members 60C includes: an extension part 60B-1, one end of which is fixed to one side of the compression member 50C, the extension part extending toward the corresponding fastening member 40A; an elastic part 60B-2 extending from the extension part 60B-1 toward a slanted surface 40A-1 formed in the fastening member 40A; a clamp part 60B-3 having teeth 60A-1 that comes into tight contact with the pipe 1 and a protrusion piece 60A-2 supported by the slanted surface 40A-1, the clamp part 60B-3 being integrally connected to the elastic part 60B-2; and a spring part 60B-4 extending from the clamp part 60B-3 to come into contact with the corresponding support member 30A, wherein the second clamp members 60C are provided in plural pairs, the second clamp members in each pair being diametrically opposite to each other, so that they can clamp the pipe 1 with the help of the restoring force of the corresponding compression spring 50A-1 when the pipe 1 is inserted into the corresponding first body member 10A.

In addition to the second clamp members 60C being arranged similarly to the first clamp members 60B so as to clamp or disengage a pipe 1, the spring parts 60B-4 integrally provided in the second clamp members 60C can sub for the role of each of the compression spring 50A, thereby simplifying an assembly process. Although each spring part 60B-4 may be formed in a coil form and connected to a clamp part 60B-3 through a separate process, it is preferred to form each clamp member 60C through primary press-processing and then to form the spring part 60B-3 in the form of a leaf spring through secondary press-processing of the clamp member 60C.

Because the second clamp members 60C also have elastic flexibility in the elastic parts 60B-2 like the first clamp members 60B, the clamp members 60C are pushed toward the first body member 10A in a state in which they are in close contact with a pipe 1 when the pipe 1 is inserted, and then the close contact extent of the clamp members 60C is reduced as they approach to the largest diameter area of the slanted surface 40A-1 in the corresponding fastening member 40A, thereby allowing the pipe 1 to be inserted to the first body member 10A. In addition, after the pipe 1 is inserted, the second clamp members 60C come into firmly tight contact with the pipe 1 as they are moved toward the smallest diameter area of the slanted surface 40A-1 by the spring parts 60B-4, thereby clamping the pipe 1.

In addition, a plurality of guide grooves, into which the spring parts 60B-4 are partially inserted, respectively, are formed on each of the support members 30A, so that the elastic force applied by the spring parts 60B-4 is provided in conformity with the direction the second clamp members 60C should be moved.

If each of the fastening members 40A is formed from a synthetic resin in the present embodiment, the protrusion pieces 60A-2 may damage the slanted surfaces 40A-1 in the fastening members 40A due to the characteristics of material of the fastening members 40A when the clamp parts 60B-3 and the pipes 1 are to be pushed to the outside by a high fluid pressure. In order to solve this problem, a metallic member 90A in a shape of a top and bottom opened cup may be inserted into each fastening member 40A to be in tight contact with the slanted surface 40A-1 in the fastening member 40A to support the protrusion pieces 40A-2.

In addition, by providing a shape-maintaining member 100A for maintaining the circular arrangement of the second clamp members 60C to surround the area between the clamp parts 60B-3 and the spring parts 60B-4, it is possible to prevent the clamp parts 60B-3 from being arranged at irregular intervals and to prevent the spring parts 60B-4 from being bent in any direction.

For reference, each of the clamp parts 60B-3 has a shape with a height gradually increasing as approaching to the diameter-increasing slanted surface 40A-1 in a corresponding fastening member 40A, and the slanted surface 40A-1 includes a slowly slanted surface 40A-11 (the surface formed following the stopper portion 40A-2 that allows each of the protrusion pieces 60A-2 to be partially interposed between the fastening member 40A and a pipe 1, and a rapidly slanted surface 40A-12 for providing a space that allows the teeth 60A-1 of the clamp parts 60B-3 60A to be moved to the slanted surface 40-1 so that the teeth 60A-1 do not come into tight contact with the pipe 1. With this construction, when the compression member 50C or push member 50D is pressed toward the first body member 10A, the teeth 60A-1 of the clamp parts 60B-3 are positioned in the space between the rapidly slanted surface 40A-12 and the pipe 1, thereby allowing the pipe 1 to be disengaged. To the contrary, when the compression member 50C or the push member 50D is moved to the outside by an elastic force, the protrusion pieces 60A-2 of the clamp parts 60B-3 are press-fitted between the slowly slanted surface 40A-11 and the pipe 1 so that the teeth 60A-1 will compress the pipe 1, thereby preventing the pipe 1 from being disengaged.

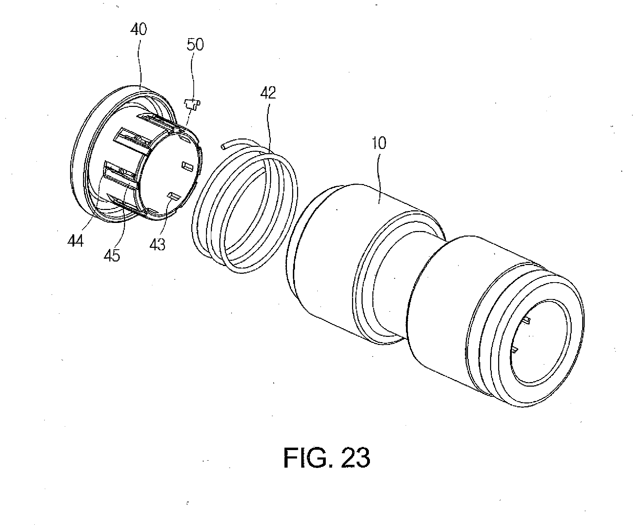

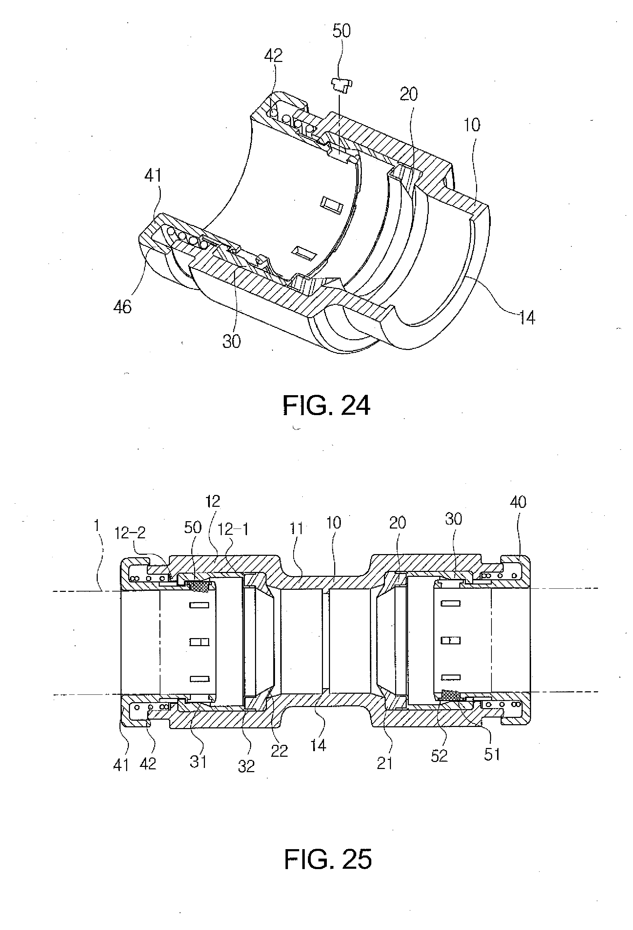

FIGS. 23 to 25 are views illustrating a one-touch pipe connection device according to a modified embodiment of the present invention.

The one-touch pipe connection device according to the modified embodiment of the present invention includes a main injection-molded member 10, into which pipes 1 are inserted, sealing members 20 disposed to oppose each other with reference to a central portion of the main injection-molded member 10, to secure watertightness, and first metal members 30 fitted in the main injection-molded member 10 at opposite sides of the main injection-molded member 10, respectively Each first metal member 30 is formed with an inclined surface 31. The one-touch pipe connection device also includes second injection-molded members 40 inserted into the main injection-molded member 10 such that they are partially disposed in the first metal members 30 fitted in the main injection-molded member 10, respectively. Each second injection-molded member 40 is always urged to move outwardly by a compression spring 42. The one-tough pipe connection device also includes contact members 50 installed at each second injection-molded member 40 such that they come into close contact with an outer circumferential surface of a corresponding one of the pipes 1 when the second injection-molded member 40 moves.

The main injection-molded member 10 includes fitting portions 11 respectively disposed at opposite sides of the central portion of the main injection-molded member 10, to receive respective pipes 1, and enlarged-diameter portions 12 extending from respective fitting portions 11 while being integrated with respective fitting portions 11. Each enlarged-diameter portion 12 has a predetermined diameter such that it is spaced apart from a corresponding one of the pipes 1, which are inserted into the main injection-molded member 10, by a certain clearance. Each enlarged-diameter portion 12 is provided, at an inner circumferential surface thereof, with a straight region 12-1 and a step 12-2.

The main injection-molded member 10 as described above is injection-molded using a single mold. Injection molding of the main injection-molded member 10 is carried out in a conventional manner. That is, the inclined surface 31 of each first metal member 30 is pressed by a core of the mold in a state in which the first metal member 30 is inserted into the corresponding straight region 12-1 such that it is fixed. In order to allow the molded product to be separated from the mold, the core is retracted after completion of injection molding. Thus, although it takes an increased time to mold the main injection-molded member 10, it is possible to achieve an enhancement in durability and a reduction in the number of element assembly processes because it is unnecessary to additionally connect elements.

In place of a straight type as illustrated in the drawings, the structure of the main injection-molded member 10 as described above may have a type for connection of pipes enabling flow direction change, for example, an elbow type, a T type, a branched type or the like, which enables installation of additional pipes at opposite sides of a straight type structure.

Each sealing member 20 applied to the main injection-molded member 10 includes a fixing portion 21, which is inserted between the corresponding fitting portion 11 and enlarged-diameter portion 12 of the main injection-molded member 10 such that it is fixed when the main injection-molded member 10 is injection-molded, and a flap-shaped elastic member 22 extending inclinedly from the fixing portion 21 toward the central portion of the main injection-molded member 10 while being integrated with the fixing portion 21 such that it is in close contact with the outer circumferential surface of the corresponding pipe 1. When the pipe 1 is inserted, the flap-shaped elastic portion 22 is fitted in a gap between the pipe 1 and the main injection-molded member 10 while being bent in the same direction as the insertion direction of the pipe 1. When water pressure exerts in a separation direction of the pipe 1, the elastic portion 22 functions to prevent fluid leakage. Thus, it is possible to secure watertightness in connection of pipes for feeding of a fluid.

Each first metal member 30 has a cylindrical shape and is inserted into the corresponding straight region 12-1 in a fixed state during injection molding of the main injection-molded member 10. The inclined surface 31 of the first metal member 30 has a diameter gradually increasing from the corresponding step 12-2 in the insertion direction of the pipe 1. The first metal member 30 also includes a receiving portion 32 extending from the inclined surface 31, to partially receive the corresponding fitting portion 21. In particular, the first metal member 30 is disposed in a region contacting the corresponding contact members 50, which are made of a metal material. In this connection, the first metal member 30 has firmness peculiarly provided by the material thereof, to sustain strong stress generated when the contact members 50 are moved in the separation direction of the pipe 1 due to water pressure such that it is fitted between the inclined surface 31 and the pipe 1 in the form of wedges. Meanwhile, it is possible to take into consideration a structure for threadedly coupling the outer circumferential surface of the first metal member 30 and the straight region of the main injection-molded member 10.

For reference, the receiving portion 32 of the first metal member 30 functions to prevent shift of the corresponding sealing member 20, which is inserted into the mold upon injection-molding the main injection-molded member 10.

Each second injection-molded member 40 is provided, at an outer end thereof, with a protrusion rib 41, which is outwardly exposed. One compression spring 42 is disposed between the protrusion rib 41 and the corresponding step 12-2 of the main injection-molded member 10. Thus, a movement space of the second injection-molded member 40 is also used as a space for disposition of the compression spring 42. Accordingly, it is possible to reduce the total length of the device of the present invention, as compared to the case in which the compression spring 42 is disposed within the main injection-molded member 10.

The contact members 50 are arranged at regular intervals at each second injection-molded member 40 disposed at the inclined surface 31 of the corresponding first metal member 30. Each contact member 50 includes teeth 51. When each pipe 1 is inserted into the main injection-molded member 10, the teeth 51 of the corresponding contact members 50 come into close contact with the outer circumferential surface of the pipe 1 by resilience of the corresponding compression spring 42, to firmly fix the pipe 1.

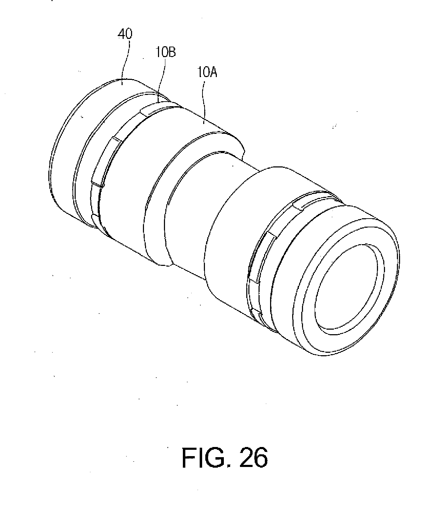

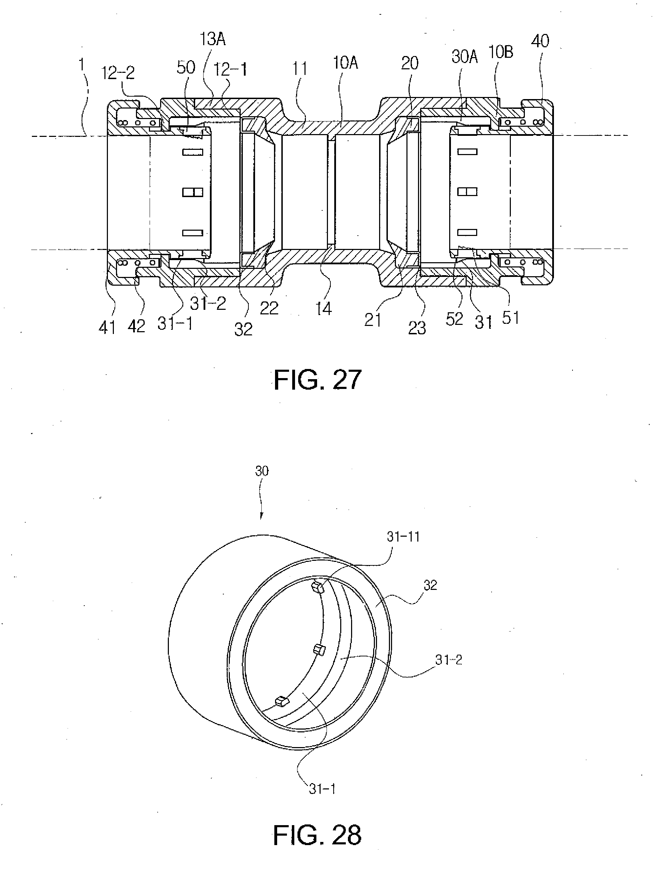

FIGS. 26 and 27 are views illustrating a one-touch pipe connection device according to another modified embodiment of the present invention.

The one-touch pipe connection device according to the illustrated embodiment of the present invention includes a first injection-molded member 10AB, into which pipes 1 are inserted, and sealing members 20 disposed to oppose each other with reference to a central portion of the first injection-molded member 10AB, to secure watertightness. The one-touch pipe connection device also includes third injection-molded members 10BB threadedly coupled to the first injection-molded member 10AB at opposite sides of the first injection-molded member 10AB, respectively, and second metal members 30AB each simply inserted into a corresponding one of the third injection-molded members 10BB and formed with an inclined surface 31. The one-touch pipe connection device further includes second injection-molded members 40 inserted into the third injection-molded members 10BB such that they are partially disposed in the second metal members 30AB fitted in the third injection-molded members 10BB, respectively. Each second injection-molded member 40 is always urged outwardly by a compression spring 42. The one-tough pipe connection device also includes contact members 50 installed at each second injection-molded member 40 such that they come into close contact with an outer circumferential surface of a corresponding one of the pipes 1 when the second injection-molded member 40 moves.

The first injection-molded member 10AB includes fitting portions 11 respectively disposed at opposite sides of the central portion of the first injection-molded member 10AB, and enlarged portions 13AB extending from respective fitting portions 11 while being integrated with respective fitting portions 11. Each enlarged portion 13AB has a predetermined diameter such that it is spaced apart from a corresponding one of the pipes 1, which are inserted into the first injection-molded member 10AB, by a certain clearance. In accordance with this structure, the first injection-molded member 10AB receives the sealing members 20, third injection-molded members 10BB, second metal members 30AB, second injection-molded members 50 and contact members 50 or is coupled therewith, to connect the pipes 1.

In place of a straight type as illustrated in the drawings, the structure of the first injection-molded member 10AB as described above may have a type for connection of pipes enabling flow direction change, for example, an elbow type, a T type, a branched type or the like, which enables installation of additional pipes at opposite sides of a straight type structure.

Each sealing member 20 includes a fixing portion 21, which is inserted between the corresponding fitting portion 11 and enlarged portion 13AB of the first injection-molded member 10AB such that it is fixed, at least one elastic member 22 extending inclinedly from the fixing portion 21 toward the central portion of the first injection-molded member 10AB while being integrated with the fixing portion 21 such that it is in close contact with the outer circumferential surface of the corresponding pipe 1 in an inserted state of the pipe, and a circular support 23 to partially receive the fixing portion 21. The circular support 23 performs the same function as that of the receiving portion 32 in the previous embodiment.

Each sealing member 20 is inserted into a mold before injection molding of the first injection-molded member 10AB. During injection molding of the first injection-molded member 10AB, the fitting portion 21 of the sealing member 20 is fixed between the corresponding fitting portion 11 and enlarged portion 13AB. Accordingly, it is possible to maintain the sealing member 20 in a firmly fixed state for a prolonged period of time without separately pressing or fixing the sealing member 20.

Each third injection-molded member 10BB is threadedly coupled, at the outer circumferential surface thereof, with the corresponding enlarged portion 13AB of the first injection-molded member 10AB. Each third injection-molded member 10BB is provided, at an inner circumferential surface thereof, with a straight region 12-1 and a step 12-2 arranged, in this order, in a direction opposite to the insertion direction of the corresponding pipe 1. Each third injection-molded member 10BB is used to limit the movement range of the corresponding second injection-molded member 40, at which the contact members 50 are installed to fix the corresponding pipe 1, and to prevent separation of the second injection-molded member 40. Threaded coupling of each third injection-molded member 10BB to the first injection-molded member 10AB is irrespective of fixing of the corresponding sealing member 20. For this reason, it is unnecessary to strongly fasten each third injection-molded member 10BB to the first injection-molded member 10AB. In this regard, great physical stress is not applied to the first and third injection-molded members 10AB and 10BB, different than a pipe connection device using a conventional fastening method. Also, a known structure for preventing unfastening after threaded coupling may be provided, to prevent the coupling portions of the first and third injection-molded members 10AB and 10BB from being easily unfastened even when impact or vibration is applied to the first and third injection-molded members 10AB and 10BB.

Each second metal member 30AB has a cylindrical shape and is inserted into the straight region 12-1 of the third injection-molded member 10BB after injection molding of the third injection-molded member 10BB. The inclined surface 31 of the second metal member 30AB has an inner diameter gradually increasing from the corresponding step 12-2 in the insertion direction of the pipe 1. Using a simple insertion method, the second metal member 30AB is fitted in the corresponding third injection-molded member 10BB, which is separated from the first injection-molded member 10AB.

Each second injection-molded member 40 is provided, at an outer end thereof, with a protrusion rib 41, which is outwardly exposed. One compression spring 42 is disposed between the protrusion rib 41 and the corresponding step 12-2 of the third injection-molded member 10BB. Each second injection-molded member 40 is partially inserted into the corresponding third injection-molded member 10BB such that it is movable along the third injection-molded member 10BB, to adjust the positions of the corresponding contact members 50, and thus to allow fixing or separation of the corresponding pipe 1.

The contact members 50 are arranged at regular intervals at each second injection-molded member 40 disposed at the inclined surface 31 of the corresponding second metal member 30AB. Each contact member 50 includes teeth 51. When each pipe 1 is inserted into the first injection-molded member 10AB via the corresponding second and third injection-molded members 40 and 10BB, the teeth 51 of the corresponding contact members 50 come into close contact with the outer circumferential surface of the pipe 1 by resilience of the corresponding compression spring 42, to firmly fix the pipe 1.

Hereinafter, configurations applied, in common, to the above-described embodiments will be described.

Fitting holes 43 are formed through the second injection-molded member 40. The contact members 50 are fitted in respective fitting holes 43. Each contact member 50 has a protrusion portion 52, which is supported by the corresponding inclined surface 31, to bring the teeth 51 of the contact member 50 into close contact with the outer circumferential surface of the corresponding pipe 1 by resilience of the corresponding compression spring 42 when the pipe 1 is inserted. Preferably, each contact member 50 is shaped such that the height thereof increases gradually in an extension direction of the corresponding inclined surface 31, along which the diameters of the first and second metal members 30 and 30AB increase gradually. The inclined surface 31 includes a gentle inclined surface 31-1 (a surface continuous to the step 12-2) causing a portion of the protrusion portion 52 to be interposed between the first or second metal member 30 or 30AB and the pipe 1, and a sharp inclined surface 31-2 providing a space allowing the teeth 51 of the contact members 50 to be pivoted outwardly of respective corresponding fitting holes 43 such that the teeth 51 do not come into contact with the pipe 1. When each second injection-molded member 40 is pressed against the first injection-molded member 10AB or main injection-molded member 10, the teeth 51 of the corresponding contact members 50 are disposed in a space between the corresponding sharp inclined surface 31-2 and the corresponding pipe 1. In this state, accordingly, separation of the pipe 1 is allowed. On the other hand, when the second injection-molded member 40 is outwardly moved, the protrusion portion 52 of each contact member 50 is interposed between the gentle inclined surface 31-1 and the pipe 1, thereby causing the teeth 51 of the contact member 50 to press the pipe 1. In this state, accordingly, separation of the pipe 1 is prevented.

When the pipe connection device according to each embodiment of the present invention is laid underground or is embedded in a wall, foreign matter may be introduced into a gap defined between the third injection-molded member 10BB or main injection-molded member 10 and the second injection-molded member 40. In this case, subsequent maintenance and repair tasks may be troublesome. In order to eliminate such a problem, a cap 46 may be provided to extend along an outer end of the protrusion rib 41 to cover the third injection-molded member 10BB or main injection-molded member 10.

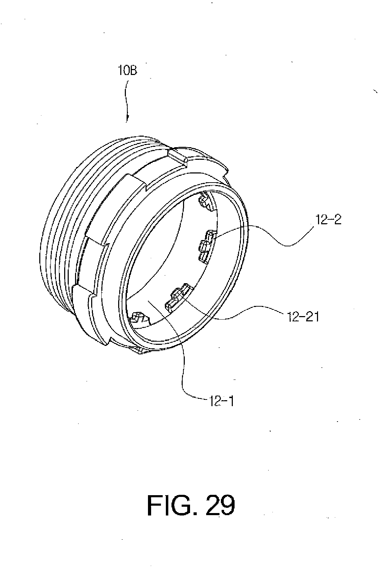

As a structure for preventing the second injection-molded member 40 from being separated from the third injection-molded member 10BB or main injection-molded member 10, insertion grooves 44 (or holes) are formed between respective fitting holes 43 and the protrusion rib 41 in the second injection-molded member 40, and movement restricting protrusions 12-21 or 31-11 are provided at the step 12-2 or gentle inclined surface 31-1, to be inserted into respective insertion grooves 44, as shown in FIG. 28 or 29. When the second injection-molded member 40, at which the contact members 50 has been installed, is inserted into the corresponding third injection-molded member 10BB or main injection-molded member 10 while causing a portion of the second injection-molded member 40 to be bent, the movement restricting protrusions 12-21 or 31-11 are positioned at respective insertion grooves 44. As a result, the second injection-molded member 40, which moves in a straight direction, is prevented from being separated from the third injection-molded member 10BB or main injection-molded member 10. Preferably, each insertion groove 44 has a length corresponding to an insertion length of the second injection-molded member 40 inserted from a position, at which the corresponding movement restricting protrusion 12-21 or 31-11 is disposed, into the third injection-molded member 10BB or main injection-molded member 10 toward the protrusion rib 41.

In the procedure in which the second injection-molded member 40 is inserted into the corresponding third injection-molded member 10BB or main injection-molded member 10 while causing a portion of the second injection-molded member 40 to be bent, the movement restricting protrusions 12-21 or 31-11 may be directly positioned at respective insertion grooves 44, as described above. In this case, however, the process of positioning the movement restricting protrusions 12-21 or 31-11 at respective insertion grooves 44, simultaneously with forcibly inserting the second injection-molded member 40 into the third injection-molded member 10BB or main injection-molded member 10, may be relatively troublesome. To this end, thickness-reduced portions 45 are formed between adjacent ones of the insertion grooves 44, respectively, to allow respective movement restricting protrusions 12-21 or 31-11 to pass the thickness-reduced portions 45 when the second injection-molded member 40, at which the contact members 50 has been installed, is inserted into the corresponding third injection-molded member 10BB or main injection-molded member 10. When the distance between the insertion grooves 44 and the movement restricting protrusions 12-31 or 31-11 is minimized, a procedure of rotating the second injection-molded member 40 such that the movement restricting protrusions 12-21 or 31-11 enter respective insertion grooves 44 after passing respective thickness-reduced portions 45 is carried out. Thus, it may be possible to more easily install the second injection-molded member 40 and contact members 50 at the third injection-molded member 10BB or main injection-molded member 10.

Meanwhile, an insertion limitation rib 14 is provided at the inner circumferential surface of the first injection-molded member 10AB or main injection-molded member 10, to cause the pipes 1 to be inserted into opposite portions of the first injection-molded member 10AB or main injection-molded member 10 by the same length. That is, the insertion limitation rib 14 limits the insertion length of each pipe 1 to a predetermined length. Thus, it is possible to fix pipes at opposite sides of the first injection-molded member 10AB or main injection-molded member 10 such that the insertion lengths of the pipes are equal.

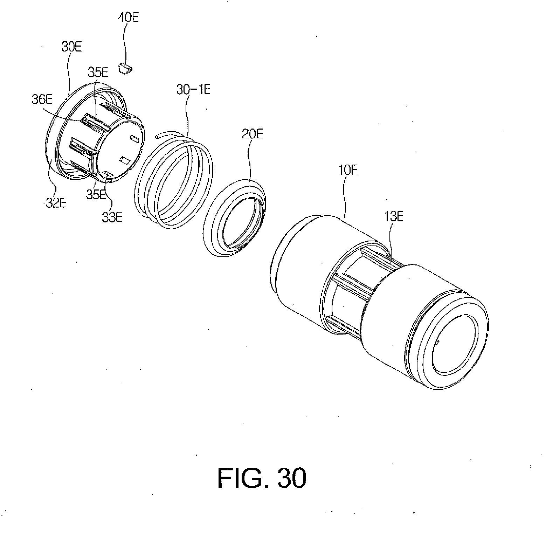

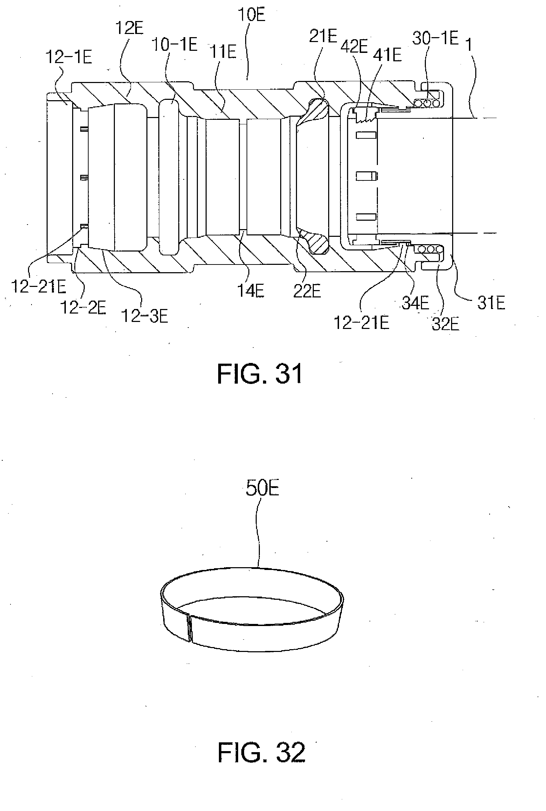

FIGs. 30 and 31 are view illustrating yet another example of the one-touch pipe connection device according to the present invention.

The yet another one-touch pipe connection device of the present invention basically comprises a synthetic resin body member 10E in which the pipe 1 is inserted, rubber packing members 20E arranged to be opposite to each other with reference to the central part of the synthetic resin body member 10E to ensure water-tightness, a release member 30E partially inserted in the synthetic resin body member 10E and moved outward by a pressing spring 30-1E, and pressing members 40E installed on the release member 30E and coming into close contact with the outer circumferential surface of the pipe 1 when the release member is moved.

The synthetic resin body member 10E comprises a fitting portion 11E in which the pipes 1 are fitted from both sides of the central part, and an enlarged portion 12E integrally extending from the fitting portion 11E and provided, at an inner circumferential surface thereof, with a stepped recess 12-1E, a straight region 12-2E, and inner diameter-increased slanted surface 12-3E arranged in this order as seen from the outside in a direction of insertion of the pipe 1.

This synthetic resin body member 10E is basically injection-molded by a set of metal die, wherein the slanted surface 12-3E may be formed according to the structure of a core of the metal die, but after injection molding, may be formed through a separate manufacturing process, together with a securing recess 10-1E between the fitting portion 11E and enlarged portion 12E for installing of the rubber packing member 20E, and as the synthetic resin body member is produced in the form of a one-piece cylinder without a coupling portion such as tightening affecting physical properties, the strength of the synthetic resin material itself can be kept as it is and a time for a product-assembling process is shortened.

The structure of synthetic resin body member 10E described above may be applied not only to the linear type illustrated in the figures, but also to an elbow type, T type, branched type (a shape allowing several pipes to be additionally installed in both lateral directions of the linear type) etc. for a direction-diversion connection between the pipes.

The rubber packing member 20E installed in the synthetic resin body member 10E has a ring portion 21E positioned in the securing recess 10-1E formed between the fitting portion 11E and enlarged portion 12E of the synthetic resin body member 10E, and a wing portion 22E slantedly and integrally extending from the ring portion 21E toward the central part of the synthetic resin body member 10E to be in close contact with outer circumferential surface of the pipe 1. The ring portion 21E is inserted in the securing recess 10-1E, thereby keeping the rubber packing member 20E from deviating from the synthetic resin body member 10E, and upon insertion of the pipe 1 the wing portion 22E is flexed in the direction of insertion of the pipe to be fitted in a gap between the pipe 1 and the synthetic resin body member 10E, and upon application of water pressure in a direction of extraction of the pipe 1, the ring portion 21E and the wing portion 22E each function to prevent the water leakage, whereby the water-tightness is ensured for connection between pipes for delivery of fluid.

According to the structure of rubber packing member 20E as described above, the ring portion 21E prevents the water leakage from the pipe toward the securing recess 10-1E and the wing portion 22E prevents the water leakage from a space between the pipe and rubber packing member 20E, and since the range over which the wing portion 22E can resiliently move is wide, the rubber packing member allows smoother insertion of the pipe 1 and provides better water-tightness even under vibration when compared to the existing packing member of O-ring type.

The release member 30E is basically in the form of a through cylinder and has a protruded rib 31E at its outer end and a pressing spring 30-1E is disposed between the protruded rib 31E and the stepped recess 12-1E of the synthetic resin body member 10E. Thus, since a space for movement of the release member 30E is also utilized for disposition of the pressing spring 30-1E, as a result the entire length of the pipe connection device according to the present invention of the present invention can be shortened when compared to the case where the pressing spring 30-1E is disposed inside the synthetic resin body member 10E.

The pressing members 40E are arranged with a constant interval on the release member 30E positioned on the slanted surface 12-3E of the synthetic resin body member 10E and have teeth 41E. When the pipe 1 is inserted into the synthetic resin body member 10E, as the release member 30E is moved outward by restoring force of the pressing spring 30-1E, the teeth 41E press the outer circumferential surface of the pipe 1, thereby enabling securing between the pipes.

Here, the release member 30E is formed with fitting holes 33E in which the pressing members 40E are inserted. The pressing members 40E are provided with a protruded piece 42E which is supported by the slanted surface 31E so that the teeth 41 E are brought into close contact with the outer circumferential surface of the pipe 1. When the pipe 1 is inserted into the synthetic resin body member 10E, in the state where the teeth 41E protruding from the fitting hole 33E toward the pipe 1 and the pipe 10E are in close contact with each other, as the release member 30E is moved toward the central part of the synthetic resin body member 10E, the pressing member 40E are moved into a space defined by the slanted surfaces 12-3E in a specific section of the slanted surface 12-3E and thus the teeth 41E are positioned within the fitting hole 33E, and at this time while the release member 30E is pushed in a direction opposite the direction of insertion of the pipe 1 due to the restoring force of the pressing spring 30-1E, and as a result, the pressing members 40E presse the pipe 1 so as to prevent the deviation thereof to the outside.

That is to say, when the release member 30E is pressed toward the synthetic resin body member 10E, the teeth 41E of the pressing members 40E are positioned in the above-mentioned specific section of the slanted surface 12-3E, thereby allowing insertion or removal of the pipe 1. On the contrary, when the release member 30E is moved outward, the teeth 41E press the pipe 1 to prevent the separation of the pipe 1 while the protruded pieces 42E of the pressing members 40E are supported by the slanted surface in which the diameter is decreased.

Furthermore, when the pipe connection device of the present invention is buried in underground or wall body, for avoiding a problem that foreign substance enters the gap between the synthetic resin body member 10E and the release member 30E and thus a later maintenance work is rendered troublesome, a cover part 32E may be further provided which covers a part of the synthetic resin body member 10E along a periphery of an end of the protruded rib 31E.

As a structure for preventing such a release member 30E from deviating from the synthetic resin body member 10E, insertion recesses 34E(possibly in the form a hole) are formed between the fitting hole 33E and the protruded rib 31E of the release member 30E, and movement-limiting protrusions 12-21E inserted into the insertion recesses 34E are formed in the straight region 12-2E of the synthetic resin body member 10E. When a part of the release member 30E with the pressing members 40E installed thereon is flexed to be inserted into the synthetic resin body member 10E, the release member 30E linearly moved is prevented from being extracted from the synthetic resin body member 10E by the movement-limiting protrusions 12-21E being positioned in the insertion recesses 34E, wherein it is preferred that the insertion recesses 34E are formed from the position of the movement-limiting protrusions 12-21E toward the protruded rib 31E by a distance over which the release member 30E is inserted into the synthetic resin body member 10E.

In a process where a part of the release member 30E is inserted into the synthetic resin body member 10E while flexed, the movement-limiting protrusions 12-21E may be directly positioned in the insertion recesses 34E, as described above, but in such a case, a work may be somewhat troublesome of pushing the release member 30E into the synthetic resin body member 10E and at the same time positioning the movement-limiting protrusions 12-21E in the insertion recesses 34E. Therefore, a higher flexibility is imparted to the release member 30E and thickness-reduced parts 35E allowing passage of the movement-limiting protrusion 12-21E therethrough are formed between every adjacent ones of the plurality of insertion recesses 34E and in addition sliding surfaces 36E are provided between the insertion recess 34E and the thickness-reduced part 35E which are gradually slanted upward from the insertion recess 34E toward the thickness-reduced part 35E. When the release member 30E with the pressing members 40E installed thereon is pushed into the synthetic resin body member 10E, the movement-limiting protrusions 12-21E pass along the thickness-reduced parts 35E and when a distance between the insertion recess 34E and the movement-limiting protrusion 12-21E is shortest, the release member 30E is rotated and accordingly the movement-limiting protrusion 12-21E rides over the sliding surface 36E between the thickness-reduced part 35E and the insertion recess 34E to be easily positioned in the insertion recess 34E, whereby the release member 30E and the pressing members 40E can be prevented from deviating from the synthetic resin body member 10E.

In addition, a insertion-limiting rib 14E for allowing the pipe 1 to be inserted by the same length from both sides is provided on the inner surface of the synthetic resin body member 10E, so that the pipe 1 is inserted only by a fixed length, as a result the pipes disposed on the both sides of the synthetic resin body member 10E can be secured over the same length.

In the following, a description will be given of the pipe connection device having a reinforcing structure for withstanding a higher water pressure with synthetic resin material according to the present invention.

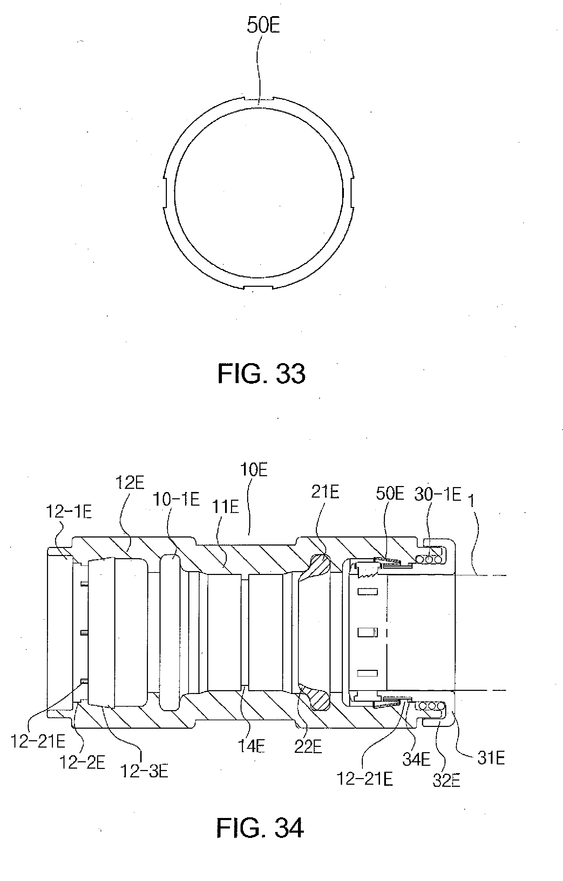

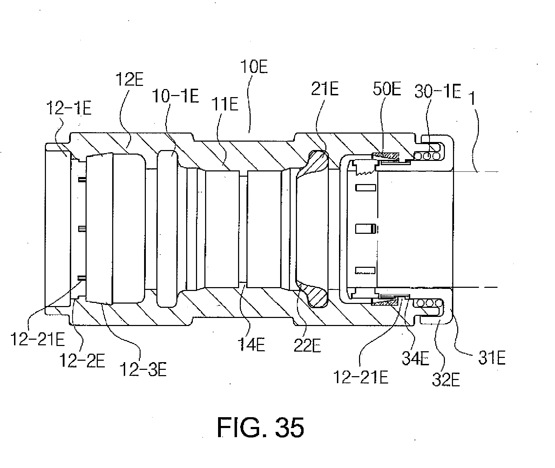

FIGs. 32 to 35 are view illustrating a reinforcing member according to the present invention.

The slanted surface 12-3E for supporting the protruded pieces 42E of the pressing members 40E is the part of the pipe connection device of the present invention on which stress is most concentrated, and the higher the water pressure is, the higher the partial stress applied on the slanted surface 12-3E is, therefore, in the case where the synthetic resin body member 10E is made of material for a general plastic pipe connector, for example, ABS, PVC, CPVC, HDPE etc., a phenomenon may occur that the slanted surface 12-3E is damaged by the protruded pieces 42E at relatively high water pressure such as 50 kgf/cm² or higher and accordingly the release member 30E deviates from the synthetic resin body member 10E.

Therefore, in the present invention, the material forming the slanted surface 12-3E of the synthetic resin body member 10E may be replaced with a reinforcing member 50E made of material such as metal or reinforced plastic. An example of structure of such a reinforcing member 50E may be in the form of a snap ring with a part thereof cut, wherein the snap ring is installed in the recess of the enlarged portion 12E by elastic force. As another example, mentioned may be a reinforcing member 50E in the form of a ring which is also inserted into the metal die at the time of injection molding of the synthetic resin body member 10E, wherein a slanted surface of the reinforcing member 50E in the form of a ring may be formed by a separate manufacturing process after the injection molding.

Furthermore, the synthetic resin body member 10E necessarily has a welding line at which the resins meet each other at the time of the injection molding. Such a welding line is deemed as a weakened part in the synthetic resin body member 10E of cylindrical structure, therefore, it is preferred that reinforcing ribs 13E are provided for reinforcing the welding line in order to withstand the water pressure stronger than the synthetic resin body member 10E.

As described above, the one-touch pipe connection device makes it possible to firmly interconnect pipes merely by inserting the pipes into the connection device while providing more excellent fluid-tightness and reducing the size of the final products as compared to the prior arts. As a result, the one-touch pipe connection device can drastically shorten the periods of piping work and piping maintenance and repair work, can prevent leakage occurrence accidents in advance, and can miniaturize the final products.

In addition, because it is possible to use a synthetic resin as the material for the components of the one-touch pipe connection device beyond metallic materials due to the injection-moldable construction of each of the components, excellent products can be mass-produced with low manufacturing costs.

Although preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. A one-touch pipe connection device comprising:
a first body member (10A) with a size for receiving a pipe (1), the first body member comprising, on each of left and right sides of the inner peripheral surface thereof with reference to the longitudinal center of the inner peripheral surface, a stepped portion (10A-1) formed to horizontally extend, a first insertion groove (10A-2) arranged vertically in relation to the stepped portion (10A-1), and a threaded portion (10A-3) formed to horizontally extend from the first insertion groove (10A-2), wherein the stepped portion (10A-1), the first insertion groove (10A-2) and the threaded portion (10A-3) are arranged in this order from the longitudinal center to each end of inner peripheral surface of the first body member (10A);
a first fluid-tight member (20A) comprising a compression ring portion (20A-1) arranged along the first insertion groove (10A-2), a seating portion (20A-2) integrally extending from the compression ring portion (20A-1) and arranged in the stepped portion (10A-1), and an elastic portion (20A-3) slantingly extending from an end of the seating portion (20A-2) toward the center of the first body member (10A) so that the elastic portion (20A-3) comes into tight contact with a pipe (1) along the outer peripheral surface of the pipe when the pipe is inserted;
an annular support member (30A) formed with a compression groove (30A-1) that comes into tight contact with the compression ring portion (20A-1);
a fastening member (40A) which is adapted to compress one of the support members (30A) by one end thereof by being screwed to the first body member (10A), the fastening member (40A) having a slanted surface (40A-1) with an inner diameter increasing along the direction of inserting the pipe (1), and a stopper portion (40A-2) formed at the smaller-diameter end of the slanted surface (40A-1);
a compression member (50A) comprising a first protrusion rib (50A-2) inserted into the fastening member (40A) to form a closed space for arranging a compression spring (50A-1) together with the stopper portion (40A-2), and a second protrusion rib (50A-3) formed opposite to the first protrusion rib (50A-2) and exposed to the outside; and
a plurality of tight contact elements (60A) installed at regular intervals on an end portion of the compression member (50A) positioned within the slanted surface (40A-1), each of the tight contact elements (60A) having teeth (60A-1), whereby when the pipe (1) is inserted into the first body member (10A), the teeth (60A-1) come into tight contact with the outer peripheral surface of the pipe (1) with the help of the restoring force of the compression spring (50A-1).

2. A one-touch pipe connection device comprising:
a second body member (10AA) with a size for receiving a pipe (1), the second body member (10AA) having an anchoring protrusion (10AA-1) formed along the inner peripheral surface of the second body member (10AA) at the longitudinal center of the second body member, the inner peripheral surface being formed with threads on each end area thereof;
an insertion member (70A) inserted into the second body member (10AA) and fixed along the anchoring protrusion (10AA-1) at the longitudinal central area thereof, the insertion member (70A) having a second insertion groove (70A-1) at each end of the inner peripheral surface thereof;
a second fluid-tight member (20AA) comprising a fixed ring portion (20AA-1) fixedly fitted in the second insertion groove (70A-1), and an elastic portion (20AA-2) slantingly extending from an end of the fixed ring portion (20AA-1) toward the center of the second body member (10AA) so that the elastic portion (20AA-2) comes into tight contact with a pipe (1) along the outer peripheral surface of the pipe when the pipe is inserted;
a fastening member (40A) adapted to compress the insertion member (70A) by one end thereof by being screwed to the second body member (10AA), the fastening member (40A) having a slanted surface (40A-1) with an inner diameter increasing along the direction of inserting a pipe (1), and a stopper portion (40A-2) formed at the smaller-diameter end of the slanted surface (40A-1);
a compression member (50A) comprising a first protrusion rib (50A-2) inserted into the fastening member (40A) to form a closed space for arranging a compression spring (50A-1) together with the stopper portion (40A-2), and a second protrusion rib (50A-3) formed opposite to the first protrusion rib (50A-2) and exposed to the outside; and
a plurality of tight contact elements (60A) installed at regular intervals on an end portion of the compression member (50A) positioned within the slanted surface (40A-1), each of the tight contact elements (60A) having teeth (60A-1), whereby when the pipe 1 is inserted into the second body member (10AA), the teeth (60A-1) come into tight contact with the outer peripheral surface of the pipe (1) with the help of the restoring force of the compression spring (soya-1).

3. The one-touch pipe connection device as claimed in claim 1 or claim 2, wherein the compression member (50A) is formed with a plurality of slits (50A-4) spaced apart from each other and extending longitudinally from the end opposite to the second protrusion rib (50A-3).

4. The one-touch pipe connection device as claimed in claim 1, wherein one or more anchoring ribs (10A-4) are formed on the outer peripheral surface of at least one of the first body member (10A) and the fastening member (40A), in such a manner that one or more tip end portions of an elastic bracket (2) can be engaged with and anchor the anchoring ribs (10A-4), the elastic bracket being adapted to be anchored to a wall or floor so as to anchor a cylindrical member.

5. A one-touch pipe connection device comprising:
a first body member (10A) with a size for receiving a pipe (1), the first body member (10A) comprising, on each of left and right sides of the inner peripheral surface thereof with reference to the longitudinal center of the inner peripheral surface, a stepped portion (10A-1) formed to horizontally extend, a first insertion groove (10A-2) arranged vertically in relation to the stepped portion (10A-1), and a threaded portion (10A-3) formed to horizontally extend from the insertion groove (10A-2), wherein the stepped portion, the first insertion groove and the threaded portion are arranged in this order from the longitudinal center to each end of inner peripheral surface of the first body member;
a first fluid-tight member (20A) comprising a compression ring portion (20A-1) arranged along the first insertion groove (10A-2), a seating portion (20A-2) integrally extending from the compression ring portion (20A-1) and arranged in the stepped portion (10A-1), and an elastic portion (20A-3) slantingly extending from an end of the seating portion (20A-2) toward the center of the first body member (10A) so that the elastic portion comes into tight contact with a pipe along the outer peripheral surface of the pipe (1) when the pipe is inserted;
an annular support member (30A) formed with a compression groove (30A-1) that comes into tight contact with the compression ring portion (20A-1);
a fastening member (40A) which is adapted to compress one of the support members (30A) by one end thereof by being screwed to the first body member (10A), the fastening member having a slanted surface (40A-1) with an inner diameter increasing along the direction of inserting the pipe (1), and a stopper portion (40A-2) formed at the smaller-diameter end of the slanted surface (40A-1);
a push member (50B) having a second protrusion rib (50A-3) provided at an outer end thereof to be exposed to the outside, the push member being adapted to allow a compression spring (50A-1) to be arranged between the second protrusion rib and an end of the fastening member (40A) or the stopper portion (40A-2), and the push member being partially inserted into the fastening member; and
a plurality of tight contact elements (60A) installed at regular intervals on an end portion of the push member (50B) positioned within the slanted surface (40A-1), each of the tight contact elements having teeth (60A-1), whereby when the pipe (1) is inserted into the first body member (10A), the teeth (60A-1) come into tight contact with the outer peripheral surface of the pipe (1) with the help of the restoring force of the compression spring (50A-1),
wherein the push member (50B) is formed with a plurality of slits (50A-4) spaced apart from each other and extending longitudinally from the end opposite to the second protrusion rib (50A-3).

6. The one-touch pipe connection device as claimed in claim 5, wherein the second protrusion rib (50A-3) of the push member (50B) is surrounded by the fastening member (40A) in such a manner that the second protrusion rib is not exposed to the outside.

7. The one-touch pipe connection device as claimed in claim 5 or claim 6, the first body member (10A) is divided into two halves with reference to its longitudinal center, and the divided halves of the first body member (10A) are connected by a corrugated tube (80A), the opposite ends of the corrugated tube being embedded in the divided halves of the first body member (10A), respectively.

8. A one-touch pipe connection device comprising:
a first body member (10A) with a size for receiving a pipe (1), the first body member comprising, on each of left and right sides of the inner peripheral surface thereof with reference to the longitudinal center of the inner peripheral surface, a stepped portion (10A-1) formed to horizontally extend, a first insertion groove (10A-2) arranged vertically in relation to the stepped portion, and a threaded portion (10A-3) formed to horizontally extend from the insertion groove, wherein the stepped portion (10A-1), the first insertion groove (10A-2) and the threaded portion (10A-3) are arranged in this order from the longitudinal center to each end of inner peripheral surface of the first body member;
a first fluid-tight member (20A) comprising a compression ring portion (20A-1) arranged along the first insertion groove (10A-2), a seating portion (20A-2) integrally extending from the compression ring portion (20A-1) and arranged in the stepped portion (10A-1), and an elastic portion (20A-3) slantingly extending from an end of the seating portion (20A-2) toward the center of the first body member (10A) so that the elastic portion comes into tight contact with a pipe along the outer peripheral surface of the pipe (1) when the pipe is inserted;
an annular support member (30A) formed with a compression groove (30A-1) that comes into tight contact with the compression ring portion (20A-1);
a fastening member (40A) which is adapted to compress one of the support members (30A) by one end thereof by being screwed to the first body member (10A), the fastening member having a slanted surface (40A-1) with an inner diameter increasing along the direction of inserting the pipe (1), and a stopper portion (40A-2) formed at the smaller-diameter end of the slanted surface (40A-1);
a compression member (50C) having a second protrusion rib (50A-3) provided to be exposed to the outside, the compression member being adapted to allow a compression spring (50A-1) to be arranged between the second protrusion rib (50A-3) and the stopper portion (40A-2) of the fastening member (40A); and
a plurality of first clamp members (60B) comprising an extension part (60B-1), one end of which is fixed to one side of the compression member (50C), an elastic part (60B-2) extending from the extension part (60B-1) toward the slanted surface (40A-1), and a clamp part (60B-3) having teeth (60A-1) adapted to come into tight contact with the pipe (1) and a protrusion piece (60A-2) adapted to be supported by the slanted surface (40A-1), the clamp part (60B-3) being integrally connected to the elastic part (60B-2), wherein the first clamp members (60B) are provided in plural pairs, the first clamp members in each pair being diametrically opposite to each other, so that they can clamp the pipe (1) with the help of the restoring force of the compression spring (50A-1) when the pipe (1) is inserted into the first body member (10A).

9. A one-touch pipe connection device comprising:
a first body member (10A) with a size for receiving a pipe (1), the first body member (10A) comprising, on each of left and right sides of the inner peripheral surface thereof with reference to the longitudinal center of the inner peripheral surface, a stepped portion (10A-1) formed to horizontally extend, a first insertion groove (10A-2) arranged vertically in relation to the stepped portion (10A-1), and a threaded portion (10A-3) formed to horizontally extend from the first insertion groove (10A-2), wherein the stepped portion, the first insertion groove and the threaded portion are arranged in this order from the longitudinal center to each end of inner peripheral surface of the first body member;
a first fluid-tight member (20A) comprising a compression ring portion (20A-1) arranged along the first insertion groove (10A-2), a seating portion (20A-2) integrally extending from the compression ring portion (20A-1) and arranged in the stepped portion (10A-1), and an elastic portion (20A-3) slantingly extending from an end of the seating portion (20A-2) toward the center of the first body member (10A) so that the elastic portion comes into tight contact with a pipe along the outer peripheral surface of the pipe (1) when the pipe is inserted;
an annular support member (30A) formed with a compression groove (30A-1) that comes into tight contact with the compression ring portion (20A-1);
a fastening member (40A) which is adapted to compress one of the support members (30A) by one end thereof by being screwed to the first body member (10A), the fastening member (40A) having a slanted surface (40A-1) with an inner diameter increasing along the direction of inserting the pipe (1), and a stopper portion (40A-2) formed at the smaller-diameter end of the slanted surface (40A-1);
a push member (50D) formed in a ring-shape, the push member (50D) being arranged inside or outside of the fastening member (40A) and pushed in the direction of inserting the pipe (1); and
a plurality of second clamp members (60C), each of which comprises an extension part (60B-1), one end of which is fixed to one side of the push member (50D), an elastic part (60B-2) extending from the extension part (60B-1) toward the slanted surface (40A-1), and a clamp part (60B-3) having teeth (60A-1) adapted to come into tight contact with the pipe (1) and a protrusion piece (60A-2) adapted to be supported by the slanted surface (40A-1), the clamp part (60B-3) being integrally connected to the elastic part (60B-2), and a spring part (60B-4) extending from the clamp part (60B-3) to come into contact with the support member (30A),
wherein the second clamp members (60C) are provided in plural pairs, the second clamp members in each pair being diametrically opposite to each other, so that they can clamp the pipe (1) with the help of the restoring force of the spring part (60B-4) when the pipe (1) is inserted into the first body member (10A).

10. A one-touch pipe connection device comprising:
a main injection-molded member (10) comprising fitting portions (11) respectively disposed at opposite sides of a central portion of the main injection-molded member, to receive respective pipes (1), and enlarged-diameter portions (12) extending from respective fitting portions (11) while being integrated with respective fitting portions, each of the enlarged-diameter portions having a predetermined diameter such that the enlarged-diameter portion is spaced apart from a corresponding one of the pipes, which are inserted into the main injection-molded member, by a predetermined clearance, each of the enlarged-diameter portions (12) being provided, at an inner circumferential surface thereof, with a straight region (12-1) and a step (12-2);
sealing members (20) each comprising a fixing portion (21), which is inserted between a corresponding one of the fitting portions (11) and a corresponding one of the enlarged-diameter portions (12) such that the fixing portion is fixed when the main injection-molded member (10) is injection-molded, and at least one elastic member (22) extending inclinedly from the fixing portion (21) toward the central portion of the main injection-molded member (10) while being integrated with the fixing portion such that the elastic member (22) is in close contact with an outer circumferential surface of a corresponding one of the pipes (1);
first metal members (30), each of which has a cylindrical shape and is inserted into the straight region (12-1) of a corresponding one of the enlarged-diameter portions in a fixed state during injection molding of the main injection-molded member (10), each of the first metal members comprising an inclined surface (31) having a diameter gradually increasing from the step of the corresponding enlarged-diameter portion in an insertion direction of a corresponding one of the pipes (1), and a receiving portion (32) extending from the inclined surface, to partially receive the fitting portion (21) of a corresponding one of the sealing members;
second injection-molded members (40), each of which is partially inserted into the main injection-molded member (10), and comprises a protrusion rib (41) provided at an outer end of the second injection-molded member, to be outwardly exposed while allowing a compression spring (42) to be disposed between the protrusion rib (41) and the step (12-2) of a corresponding one of the enlarged-diameter portions; and
contact members (50) arranged at regular intervals at each of the second injection-molded members (40) disposed at the inclined surface (31) of a corresponding one of the first metal members (30), each of the contact members comprising teeth (51), which come into close contact with the outer circumferential surface of a corresponding one of the pipes by resilience of the compression spring (42), to firmly fix the corresponding pipe, when the corresponding pipe (1) is inserted into the main injection-molded member (10).

11. A one-touch pipe connection device comprising:
a first injection-molded member (10AB) comprising fitting portions (11) respectively disposed at opposite sides of a central portion of the first injection-molded member, and enlarged portions (13AB) extending from respective fitting portions (11) while being integrated with respective fitting portions, each of the enlarged portions having a predetermined diameter such that the enlarge portion is spaced apart from a corresponding one of the pipes (1), which are inserted into the first injection-molded member, by a predetermined clearance;
sealing members (20) each comprising a fixing portion (21), which is inserted between a corresponding one of the fitting portions (11) and a corresponding one of the enlarged portions (13AB) such that the fixing portion is fixed when the first injection-molded member (10AB) is injection-molded, at least one elastic member (22) extending inclinedly from the fixing portion toward the central portion of the first injection-molded member (10AB) while being integrated with the fixing portion (21) such that the elastic member is in close contact with an outer circumferential surface of a corresponding one of the pipes (1), and a circular support (23) to partially receive the fixing portion (21);
third injection-molded members (10BB) each threadedly coupled, at an outer circumferential surface thereof, with a corresponding one of the enlarged portions (13AB) of the first injection-molded member (10AB), each of the third injection-molded members being provided, at an inner circumferential surface thereof, with a straight region (12-1) and a step (12-2) arranged, in this order, in a direction opposite to an insertion direction of a corresponding one of the pipes (1);
second metal members (30AB), each of which has a cylindrical shape and is inserted into the straight region (12-1) of a corresponding one of the third injection-molded members (10BB), each of the second metal members comprising an inclined surface (31) having an inner diameter gradually increasing from the step (12-2) of a corresponding one of the third injection-molded members in an insertion direction of a corresponding one of the pipes (1);
second injection-molded members (40), each of which is partially inserted into a corresponding one of the third injection-molded members (10BB) and comprises an outwardly-exposed protrusion rib (41) to allow a compression spring (42) to be disposed between the protrusion rib (41) and the step (12-2) of a corresponding one of the second metal members; and
contact members (50) arranged at regular intervals at each of the second injection-molded members (40) disposed at the inclined surface (31) of a corresponding one of the second metal members (30AB), each of the contact members comprising teeth (51), which come into close contact with the outer circumferential surface of a corresponding one of the pipes (1) by resilience of the compression spring (42), to firmly fix the corresponding pipe, when the corresponding pipe (1) is inserted into the first injection-molded member (10AB).

12. A one-touch pipe connection device comprising:
a synthetic resin body member (10E) comprising a fitting portion (11E) in which pipes (1) are fitted from both sides of a central part of the synthetic resin body member, and an enlarged portion (12E) integrally extending from the fitting portion (11E) and provided with a stepped recess (12-1E), a straight region (12-1E), and inner diameter-increased slanted surface (12-3E) arranged in this order as seen from the outside in a direction of insertion of the pipe (1);
a rubber packing member (20E) having a ring portion (21E) positioned in the securing recess (10-1E) formed between the fitting portion (11E) and enlarged portion (12E) of the synthetic resin body member (10E), and a wing portion (22E) slantedly and integrally extending from the ring portion (21E) toward the central part of the synthetic resin body member (10E) to be in close contact with outer circumferential surface of the pipe (1);
a cylindrical release member (30E) which has a protruded rib (31E) at its outer end and allows a pressing spring (30-1E) to be disposed between the stepped recess (12-1E) of the synthetic resin body member (10E) and the protruded rib (31E) and a part of which is inserted in the synthetic resin body member (10E); and
pressing members (40E) which are arranged with a constant interval on the release member (30E) positioned on the slanted surface (12-3E) of the synthetic resin body member (10E) and have teeth (41E), wherein when the pipe (1) is inserted into the synthetic resin body member (10E), the teeth (41E) are brought into close contact with the outer circumferential surface of the pipe (1) by restoring force of the pressing spring (30-1E).

13. The one-touch pipe connection device as claimed in claim 12, wherein the slanted surface (12-3E) of the synthetic resin body member (10E) is provided in a reinforcing member (50E) made of metal or reinforced plastic material installed in the enlarged portion (12E).

14. The one-touch pipe connection device as claimed in claim 12, wherein formed in the release member (30E) are fitting holes (33E) in which the pressing members (40E) are fitted to be secured therein, and the pressing members (40E) inserted in the fitting holes (33E) are provided with a protruded piece (42E) which is supported by the slanted surface (12-3E) so that the teeth (41 E) are brought into close contact with the pipe (1).

15. The one-touch pipe connection device as claimed in claim 14, wherein insertion recesses (34E) are formed between the fitting hole (33E) and the protruded rib (31E) of the release member (30E), and movement-limiting protrusions (12-21E) positioned in the insertion recesses (34E) for preventing deviation of the release member (30E) are provided in the straight region (12-2E) of the synthetic resin body member (10E).

16. The one-touch pipe connection device as claimed in claim 15, wherein the release member (30E) has flexibility and thickness-reduced parts (35E) allowing passage of the movement-limiting protrusions (12-21E) therethrough are provided between every adjacent ones of the plurality of insertion recesses (34E) and sliding surfaces (36E) are further provided which are slanted upward from the thickness-reduced part (35E) toward the insertion recess (34E).

17. The one-touch pipe connection device as claimed in claim 12, wherein reinforcing ribs (13E) are further provided on the central part of the synthetic resin body member (10E) for reinforcing a welding line formed at the time of injection molding.

18. The one-touch pipe connection device as claimed in claim 12, wherein a cover part (32E) extending so as to cover a part of the synthetic resin body member (10E) is further provided along a periphery of an end of the protruded rib (31E) of the release member (30E).
